(19) Europäisches Patentamt
European Patent Office
Office européen des brevets

(11) **EP 3 033 396 B1**

(12) **EUROPÄISCHE PATENTSCHRIFT**

(45) Veröffentlichungstag und Bekanntmachung des Hinweises auf die Patenterteilung:
**29.11.2017 Patentblatt 2017/48**

(21) Anmeldenummer: **13748036.4**

(22) Anmeldetag: **12.08.2013**

(51) Int Cl.:
***C09D 5/00*** (2006.01)

(86) Internationale Anmeldenummer:
**PCT/EP2013/066830**

(87) Internationale Veröffentlichungsnummer:
**WO 2015/022007 (19.02.2015 Gazette 2015/07)**

(54) **BESCHICHTUNGSZUSAMMENSETZUNG ZUR TAUCHLACK-BESCHICHTUNG ELEKTRISCH LEITFÄHIGER SUBSTRATE ENTHALTEND EINE SOL-GEL-ZUSAMMENSETZUNG**

COATING COMPOSITION FOR THE DIP-PAINT COATING OF ELECTRICALLY CONDUCTIVE SUBSTRATES CONTAINING A SOL-GEL COMPOSITION

COMPOSITION DE REVÊTEMENT DE SUBSTRATS ÉLECTROCONDUCTEURS PAR DÉPÔT DE PEINTURE PAR IMMERSION, CONTENANT UNE COMPOSITION SOL-GEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**22.06.2016 Patentblatt 2016/25**

(73) Patentinhaber:
• **BASF Coatings GmbH
48165 Münster (DE)**
• **Henkel AG & Co. KGaA
40589 Düsseldorf (DE)**

(72) Erfinder:
• **SINNWELL, Sebastian
40239 Düsseldorf (DE)**
• **OTT, Natalja
48165 Münster (DE)**
• **HAMMER, Christian
40468 Düsseldorf (DE)**

(74) Vertreter: **BASF IP Association
BASF SE
G-FLP-C006
67056 Ludwigshafen (DE)**

(56) Entgegenhaltungen:
WO-A1-2008/025122   WO-A2-2007/015249
DE-A1- 19 909 877   DE-A1- 19 909 894
DE-A1-102007 015 450   GB-A- 2 425 975

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft eine wässrige Beschichtungszusammensetzung umfassend wenigstens eine wässrige Dispersion oder Lösung (A) wenigstens eines elektrophoretisch abscheidbaren Bindemittels und gegebenenfalls wenigstens eines Vernetzungsmittels sowie wenigstens eine wässrige Sol-Gel-Zusammensetzung (B) zur zumindest teilweisen Beschichtung eines elektrisch leitfähigen Substrats mit einem Elektrotauchlack, wobei die wässrige Sol-Gel-Zusammensetzung (B) durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung erhältlich ist, ein Verfahren zur Herstellung der Beschichtungszusammensetzung, ihre Verwendung zur zumindest teilweisen Beschichtung eines elektrisch leitfähigen Substrats mit einem Elektrotauchlack, ein Verfahren zur zumindest teilweisen Beschichtung eines elektrisch leitfähigen Substrats mit einem Elektrotauchlack durch eine zumindest teilweise elektrophoretische Abscheidung der Beschichtungszusammensetzung auf der Substratoberfläche, ein damit zumindest teilweise beschichtetes elektrisch leitfähiges Substrat sowie ein aus wenigstens einem solchen Substrat hergestellter Gegenstand oder hergestelltes Bauteil.

Im Automobilbereich müssen die zur Herstellung eingesetzten metallischen Bauteile üblicherweise gegen Korrosion geschützt werden. Die Anforderungen an den zu erzielenden Korrosionsschutz sind sehr hoch, insbesondere da seitens der Hersteller oftmals über viele Jahre eine Garantie gegen Durchrostung gewährt wird. Solch ein Korrosionsschutz wird üblicherweise durch eine Beschichtung der Bauteile oder der zu ihrer Herstellung eingesetzten Substrate mit wenigstens einer dafür geeigneten Beschichtung erzielt.

Nachteilig an den bekannten Beschichtungsverfahren, insbesondere an den bekannten in der Automobilindustrie eingesetzten Verfahren, ist, dass diese Verfahren üblicherweise einen Phosphatierungsschritt als Vorbehandlung vorsehen, in dem das zu beschichtende Substrat nach einem optionalen Reinigungsschritt und vor einem Tauchlackierungsschritt mit einem Metallphosphat wie Zinkphosphat in einem Phosphatierungsschritt behandelt wird, um einen ausreichenden Korrosionsschutz zu gewährleisten. Diese Vorbehandlung beinhaltet üblicherweise die Durchführung mehrerer Verfahrensschritte in mehreren verschiedenen und unterschiedlich beheizten Tauchbecken. Zudem fallen bei der Durchführung einer solchen Vorbehandlung Abfallschlämme an, die die Umwelt belasten und entsorgt werden müssen. Es ist daher insbesondere aus ökonomischen und ökologischen Gründen wünschenswert, einen solchen Vorbehandlungsschritt einsparen zu können, aber dennoch zumindest die gleiche Korrosionsschutzwirkung zu erzielen, die mit den bekannten Verfahren erzielt wird.

Aus US 2008/0248211 A1 ist es bekannt, in Beschichtungszusammensetzungen zur Herstellung von Elektrotauchlacksystemen Präpolymere einzusetzen, die Silan-Gruppen wie Alkoxysilan-Gruppen tragen. Diese Silan-Gruppen können bei der Härtung des Bindemittels mitwirken, sind aber aufgrund ihrer Einbindung in das Polymersystem nicht in der Lage, in wässriger Lösung ein Sol-Gel-System auszubilden. Nachteilig an dem Einsatz solcher Beschichtungszusammensetzungen ist, dass es zu einer unerwünschten Vernetzung zwischen verschiedenen Alkoxysilan-Gruppen bzw. daraus gebildeten Silanol-Gruppen untereinander kommen kann. Zudem können Abschirmungseffekte durch das Polymersystem dazu führen, dass keine oder nur eine langsame Hydrolyse der Alkoxysilan-Gruppen zu reaktiven Silanol-Gruppen erfolgen kann.

Ein Einsatz von Silan-Verbindungen wie Alkoxy-Silanen als Additiv-Komponente in Beschichtungszusammensetzungen zur Herstellung von Elektrotauchlacksystemen ist beispielsweise aus EP 1 990 379 A2, WO 2010/088250 A1, WO 2012/009351 A1 und WO 2001/021718 A1 bekannt. Diese Silan-Verbindungen werden den Beschichtungszusammensetzungen dabei lediglich in molekularer Form zugegeben und nicht in Form einer Sol-Gel-Zusammensetzung. Nachteilig an dem Einsatz solcher Silan-Verbindungen in molekularer Form in Beschichtungszusammensetzungen ist jedoch, dass diese eine zu hohe Reaktivität aufweisen können und es damit zu unerwünschten Nebenreaktionen mit reaktiven funktionellen Gruppen des Bindemittels wie beispielsweise Hydroxyl-Gruppen oder an der Oberfläche gegebenenfalls vorhandener Pigmente kommen kann. Zudem weisen solche Beschichtungszusammensetzungen aufgrund der darin enthaltenen Silan-Verbindungen in molekularer Form üblicherweise eine nicht ausreichende Stabilität wie beispielsweise eine nicht ausreichende Lagerstabilität auf und/oder unterliegen Beschränkungen hinsichtlich der maximal in diese Zusammensetzungen einarbeitbaren Mengen an Silan-Verbindungen.

Aus EP 1 510 558 A1 ist eine Nachbehandlung von mit einem Tauchlack versehenen Substraten durch Spülen mit einer wässrigen Zusammensetzung, die kolloidale Oxide oder kolloidale Hydroxide eines Metalls der Ordnungszahl 20 bis 83 enthält, bekannt. Mit solchen kolloidalen Metalloxiden und Metallhydroxiden können jedoch keine Filmbildung und zudem keine kovalenten Bindungen mit im Tauchlack enthaltenem Bindemittel und gegebenenfalls Vernetzungsmittel ausgebildet werden können. Der Einsatz von Sol-Gel-Zusammensetzungen, insbesondere als Bestandteil der Tauchlackschicht, ist in EP 1 510 558 A1 nicht beschrieben.

Es besteht ein Bedarf an elektrophoretisch abscheidbaren Beschichtungszusammensetzungen zur zumindest teilweisen Beschichtung von elektrisch leitfähigen Substraten mit einem Elektrotauchlack, welche eine ökonomischeres und ökologischeres Beschichtungsverfahren als herkömmliche eingesetzte Beschichtungszusammensetzungen ermöglichen, aber dennoch zumindest in gleichem Maße dazu geeignet ist, die hierfür erforderliche Korrosionsschutzwirkung zu erzielen.

Eine Aufgabe der vorliegenden Erfindung ist es daher, eine Beschichtungszusammensetzung zur zumindest teilweisen Beschichtung eines elektrisch leitfähigen Substrats zur Verfügung zu stellen, welche gegenüber den aus dem Stand der Technik bekannten Beschichtungszusammensetzungen Vorteile aufweist. Insbesondere ist es eine Aufgabe der vorliegenden Erfindung, solche Beschichtungszusammensetzungen zur Verfügung zu stellen, die ein ökonomischeres und ökologisches Beschichtungsverfahren als herkömmliche eingesetzte Beschichtungszusammensetzungen ermöglichen. Insbesondere ist es zudem eine Aufgabe der vorliegenden Erfindung, solche Beschichtungszusammensetzungen zur Verfügung zu stellen, welche es ermöglichen, auf die üblicherweise noch vor einer Tauchlackierung mittels eines Metallphosphats durchzuführende Phosphatierung zu verzichten, aber mit welchen dennoch die zumindest gleiche Korrosionsschutzwirkung erzielt werden kann, die auch mit den üblicherweise eingesetzten Beschichtungszusammensetzungen erzielt werden kann.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Beschichtungszusammensetzung umfassend

(A) wenigstens eine wässrige Dispersion oder Lösung, vorzugsweise wenigstens eine wässrige Dispersion, wenigstens eines elektrophoretisch abscheidbaren Bindemittels und gegebenenfalls wenigstens eines Vernetzungsmittels, und

(B) wenigstens eine wässrige Sol-Gel-Zusammensetzung,

zur zumindest teilweisen Beschichtung eines elektrisch leitfähigen Substrats mit einem Elektrotauchlack,

wobei das elektrophoretisch abscheidbare Bindemittel kathodisch abscheidbar und ein polymeres Harz ist, das reaktive funktionelle Gruppen aufweist, welche mit dem gegebenenfalls vorhandenen Vernetzungsmittel eine Vernetzungsreaktion ermöglichen, und

wobei die wässrige Sol-Gel-Zusammensetzung (B) durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung erhältlich ist,

wobei die wenigstens eine Ausgangsverbindung wenigstens ein Metallatom und/oder Halbmetallatom und wenigstens zwei hydrolysierbare Gruppen und wenigstens einen nicht hydrolysierbaren organischen Rest aufweist

Die erfindungsgemäße wässrige Beschichtungszusammensetzung dient somit zur Herstellung einer Elektrotauchlackschicht auf einer Substratoberfläche eines elektrisch leitfähigen Substrats.

Es wurde überraschend gefunden, dass es die erfindungsgemäße wässrige Beschichtungszusammensetzung ermöglicht, auf den üblicherweise vor der Tauchlackierung, insbesondere Elektrotauchlackierung, durchzuführenden erforderlichen Schritt einer Vorbehandlung des zumindest teilweise zu beschichtenden elektrisch leitfähigen Substrats mit einem Metallphosphat wie Zinkphosphat zur Ausbildung einer Metallphosphatschicht auf dem Substrat verzichten zu können, wodurch das entsprechende Beschichtungsverfahren damit insgesamt sowohl ökonomischer, insbesondere weniger zeit- und kosten-intensiv, als auch ökologischer als herkömmliche Verfahren gestaltet werden kann.

Insbesondere wurde überraschend gefunden, dass mit der erfindungsgemäßen wässrigen Beschichtungszusammensetzung zumindest teilweise beschichtete elektrisch leitfähige Substrate insbesondere aufgrund der Gegenwart der Komponente (B) in der erfindungsgemäßen wässrigen Beschichtungszusammensetzung - im Vergleich zu mit herkömmlichen Beschichtungszusammensetzungen beschichtete Substrate, die keine Komponente (B) aufweisen, - bezüglich ihrer Korrosionsschutzwirkung aber zumindest keine Nachteile und insbesondere Vorteile aufweisen: so zeichnen sich die mit der erfindungsgemäßen wässrigen Beschichtungszusammensetzung hergestellten beschichteten Substrate, insbesondere beschichtete verzinkte Stähle und Aluminium, gegenüber entsprechenden Vergleichsbeispielen insbesondere dadurch aus, dass die Unterwanderung und der Flächenrost als Maß für Korrosionsschutzwirkung signifikant geringer ausfällt.

Zudem wurde überraschend gefunden, dass die erfindungsgemäße wässrige Beschichtungszusammensetzung zur zumindest teilweisen Beschichtung eines elektrisch leitfähigen Substrats mit einem Elektrotauchlack - trotz der in ihr enthaltenen Komponente (B) - eine gute Lagerstabilität aufweist, insbesondere aufgrund einer Stabilisierung der Komponente (B) in Anwesenheit der Komponente (A).

Der Begriff "umfassend" im Sinne der vorliegenden Erfindung, beispielsweise in Zusammenhang mit der erfindungsgemäßen wässrigen Beschichtungszusammensetzung, hat in einer bevorzugten Ausführungsform die Bedeutung "bestehend aus". Dabei können hinsichtlich der erfindungsgemäßen Beschichtungszusammensetzung in dieser bevorzugten Ausführungsform eine oder mehrere der weiteren nachstehend genannten optional in der erfindungsgemäß eingesetzten Beschichtungszusammensetzung enthaltenen Komponenten in der Beschichtungszusammensetzung enthalten sein wie zum Beispiel - neben den Komponenten (A) und (B) - zudem auch die optionalen Komponenten (C) und/oder (D) und/oder (E) sowie gegebenenfalls vorhandene organische Lösemittel. Alle Komponenten können dabei jeweils in ihren vorstehend und nachstehend genannten bevorzugten Ausführungsformen in der erfindungsgemäßen Beschichtungszusammensetzung enthalten sein.

## Beschichtungszusammensetzung

Die erfindungsgemäße wässrige Beschichtungszusammensetzung eignet sich zur zumindest teilweisen Beschichtung eines elektrisch leitfähigen Substrats mit einem Elektrotauchlack, d.h. sie ist dazu geeignet, zumindest teilweise in Form einer Elektrotauchlackschicht auf die Substratoberfläche eines elektrisch leitfähigen Substrats aufgebracht zu werden. Vorzugsweise ist die gesamte erfindungsgemäße wässrige Beschichtungszusammensetzung elektrophoretisch, besonders bevorzugt kathodisch, abscheidbar.

Die erfindungsgemäßen wässrigen Beschichtungszusammensetzungen enthalten als flüssiges Verdünnungsmittel Wasser.

Unter dem Begriff "wässrig" im Zusammenhang mit der erfindungsgemäßen Beschichtungszusammensetzung werden vorzugsweise solche flüssigen Beschichtungszusammensetzungen verstanden, die - als flüssiges Verdünnungsmittel, d.h. als flüssiges Lösemittel und/oder Dispergiermittel - Wasser als Hauptkomponente enthalten. Gegebenenfalls können die erfindungsgemäßen Beschichtungszusammensetzungen jedoch wenigstens ein organisches Lösemittel in geringen Anteilen enthalten. Als Beispiele für solche organischen Lösemittel seien heterocyclische, aliphatische oder aromatische Kohlenwasserstoffe, ein- oder mehrwertige Alkohole, insbesondere Methanol und/oder Ethanol, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt. Vorzugsweise beträgt der Anteil dieser organischen Lösemittel höchstens 20,0 Gew.-%, besonders bevorzugt höchstens 15,0 Gew.-%, ganz besonders bevorzugt höchstens 10,0 Gew.-%, insbesondere höchstens 5,0 Gew.-% oder höchstens 4,0 Gew.-% oder höchstens 3,0 Gew.-%, noch bevorzugter höchstens 2,5 Gew.-% oder höchstens 2,0 Gew.-% oder höchstens 1,5 Gew.-%, am meisten bevorzugt höchstens 1,0 Gew.-% oder höchstens 0,5 Gew.-%, jeweils bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln.

Die Anteile in Gew.-% aller in der erfindungsgemäßen Beschichtungszusammensetzung enthaltenen Komponenten, d.h. die Anteile von (A), (B) und Wasser sowie gegebenenfalls (C) und/oder (D) und/oder (E) addieren sich vorzugsweise auf 100 Gew.-%, bezogen auf das Gesamtgewicht der Beschichtungszusammensetzung.

Vorzugsweise weist die erfindungsgemäße wässrige Beschichtungszusammensetzung einen Festkörper-Anteil im Bereich von 5 bis 45 Gew.-%, besonders bevorzugt im Bereich von 7,5 bis 35 Gew.-%, ganz besonders bevorzugt von 10 bis 30 Gew.-%, noch bevorzugter im Bereich von 12,5 bis 25 Gew.-% oder im Bereich von 15 bis 25 Gew.-%, insbesondere von 17 bis 22 Gew.-%, jeweils bezogen auf das Gesamtgewicht der erfindungsgemäßen wässrigen Beschichtungszusammensetzung auf. Bestimmungsmethoden zur Bestimmung des Festkörper-Anteils sind dem Fachmann bekannt. Vorzugsweise wird der Festkörper-Anteil gemäß DIN EN ISO 3251 bestimmt.

## Substrat

Als erfindungsgemäß eingesetztes elektrisch leitfähiges Substrat eignen sich alle üblicherweise eingesetzten und dem Fachmann bekannten elektrisch leitfähigen Substrate. Vorzugsweise sind die erfindungsgemäß eingesetzten elektrisch leitfähigen Substrate ausgewählt aus der Gruppe bestehend aus Stahl, vorzugsweise Stahl ausgewählt aus der Gruppe bestehend aus kalt gewalztem Stahl, verzinktem Stahl wie tauchverzinktem Stahl, legierungsverzinktem Stahl (wie beispielsweise Galvalume, Galvannealed oder Galfan) und aluminiertem Stahl, Aluminium und Magnesium, insbesondere eignen sich verzinkter Stahl und Aluminium. Zudem eignen sich als Substrate warmgewalzter Stahl, hochfester Stahl, Zn/Mg-Legierungen und Zn/Ni-Legierungen. Als Substrate eignen sich insbesondere Teile von Karosserien oder vollständige Karosserien von zu produzierenden Automobilen. Bevor das jeweilige elektrisch leitfähige Substrat eingesetzt wird, erfolgt vorzugsweise eine Reinigung und/oder Entfettung des Substrats.

Das erfindungsgemäß eingesetzte elektrisch leitfähige Substrat kann ein mit wenigstens einem Metallphosphat vorbehandeltes Substrat sein. Eine solche Vorbehandlung mittels einer Phosphatierung, die üblicherweise nach Reinigung des Substrats und vor der Tauchlackierung des Substrats erfolgt, ist insbesondere ein in der Automobilindustrie üblicher Vorbehandlungsschritt. Es ist in diesem Zusammenhang insbesondere wünschenswert, dass eine optional durchgeführte Vorbehandlung unter ökologischen und/oder ökonomischen Gesichtspunkte vorteilhaft ausgestaltet ist.

Beispielsweise ist daher ein optionaler Vorbehandlungsschritt möglich, in dem anstelle einer üblichen Trikation-Phosphatierung auf die Nickel-Komponente verzichtet wird und stattdessen eine Dikation-Phosphatierung (enthaltend Zink- und Mangan-Kationen und keine Nickel-Kationen) des erfindungsgemäß eingesetzten elektrisch leitfähigen Substrat noch vor einer Beschichtung mit der erfindungsgemäßen wässrigen Beschichtungszusammensetzung durchgeführt wird.

Es ist jedoch gerade eine Aufgabe der vorliegenden Erfindung, dass auf eine solche Vorbehandlung des zumindest teilweise zu beschichtenden elektrisch leitfähigen Substrats mittels Phosphatierung mit einem Metallphosphat wie beispielsweise Zinkphosphat verzichtet werden kann. In einer bevorzugten Ausführungsform ist das erfindungsgemäß eingesetzte elektrisch leitfähige Substrat daher kein solches phosphatiertes Substrat.

Das erfindungsgemäß eingesetzte elektrisch leitfähige Substrat kann noch vor einer Beschichtung mit der erfindungsgemäßen wässrigen Beschichtungszusammensetzung mit einer wässrigen Vorbehandlungs-Zusammensetzung vorbehandelt werden, welche wenigstens eine wasserlösliche Verbindung, welche wenigstens ein Ti-Atom und/oder wenigstens ein Zr-Atom enthält, und wenigstens eine wasserlösliche Verbindung als Quelle für Fluorid-Ionen, welches wenigstens ein Fluor-Atom enthält, umfasst, oder mit einer wässrigen Vorbehandlungs-Zusammensetzung, welche eine wasserlösliche Verbindung umfasst, welche durch Umsetzung wenigstens einer wasserlöslichen Verbindung, welche wenigstens ein Ti-Atom und/oder wenigstens ein Zr-Atom enthält, mit wenigstens einer wasserlöslichen Verbindung als Quelle für Fluorid-Ionen, welches wenigstens ein Fluor-Atom enthält, erhältlich ist.

Vorzugsweise weisen das wenigstens eine Ti-Atom und/oder das wenigstens eine Zr-Atom dabei die Oxidationsstufe +4 auf. Vorzugsweise enthält die wässrige Vorbehandlungs-Zusammensetzung aufgrund der in ihr enthaltenen Komponenten, vorzugsweise zudem aufgrund der entsprechend gewählten Mengenanteile dieser Komponenten einen Fluoro-Komplex wie beispielsweise ein Hexfluorometallat, d.h. insbesondere Hexafluorotitanat und/oder wenigstens ein Hexafluorozirkonat. Vorzugsweise weist die Vorbehandlungs-Zusammensetzung eine Gesamtkonzentration an den Elementen Ti und/oder Zr auf, die $2,5 \cdot 10^{-4}$ mol/L nicht unterschreitet, aber nicht grösser als $2,0 \cdot 10^{-2}$ mol/L ist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt.

Vorzugsweise enthält die Vorbehandlungs-Zusammensetzung zudem Kupferionen, vorzugsweise Kupfer(II)-Ionen sowie gegebenenfalls eine oder mehrere wasserlösliche und/oder wasserdispergierbare Verbindungen, die wenigstens ein Metallion ausgewählt aus der Gruppe bestehend aus Ca, Mg, Al, B, Zn, Mn und W sowie Mischungen davon enthält, vorzugsweise wenigstens ein Alumosilikat und hierbei insbesondere ein solches, das ein atomares Verhältnis von Al zu Si-Atomen von zumindest 1:3 aufweist. Die Herstellung solcher Vorbehandlungs-Zusammensetzungen und ihr Einsatz in der Vorbehandlung elektrisch leitfähiger Substrat ist beispielsweise aus WO 2009/115504 A1 bekannt. Die Alumosilikate liegen vorzugsweise als Nanopartikel mit einer durch dynamische Lichtstreuung bestimmbaren Teilchengröße im Bereich von 1 bis 100 nm. Die durch dynamische Lichtstreuung bestimmbare Teilchengröße solcher Nanopartikel im Bereich von 1 bis 100 nm wird dabei gemäß DIN ISO 13321 bestimmt.

**Komponente (A) sowie optionale Komponenten (C) und (D) sowie (E)**

Die erfindungsgemäße wässrige Beschichtungszusammensetzung erhält als Komponente (A) wenigstens eine wässrige Dispersion oder Lösung (A), vorzugsweise wenigstens eine wässrige Dispersion, wenigstens eines elektrophoretisch abscheidbaren Bindemittels und gegebenenfalls wenigstens eines Vernetzungsmittels.

Der Begriff "Bindemittel" als Bestandteil der wässrigen Dispersion oder Lösung (A) umfasst im Sinne der vorliegenden Erfindung vorzugsweise für die Filmbildung verantwortliche elektrophoretisch abscheidbare polymere Harze der erfindungsgemäßen wässrigen Beschichtungszusammensetzung, wobei jedoch gegebenenfalls vorhandenes Vernetzungsmittel nicht vom Begriff des Bindemittels mit eingeschlossen ist. Vorzugsweise ist ein "Bindemittel" im Sinne der vorliegenden Erfindung daher ein polymeres Harz, wobei jedoch gegebenenfalls vorhandenes Vernetzungsmittel nicht vom Begriff des Bindemittels mit eingeschlossen ist. Insbesondere werden zudem gegebenenfalls vorhandene Pigmente und Füllstoffe nicht unter den Begriff des Bindemittels subsumiert. Vom Begriff "Bindemittel" wird im Sinne der vorliegenden Erfindung ferner nicht die Komponente (B) der erfindungsgemäßen wässrigen Beschichtungszusammensetzung, also die wässrige Sol-Gel-Zusammensetzung (B), umfasst.

Vorzugsweise weist die erfindungsgemäß eingesetzte wässrige Dispersion oder Lösung (A) wenigstens eines elektrophoretisch abscheidbaren Bindemittels und gegebenenfalls wenigstens eines Vernetzungsmittels einen nichtflüchtigen Anteil, d.h. einen Festkörper-Anteil, in einem Bereich von 25 bis 60 Gew-%, besonders bevorzugt in einem Bereich von 27,5 bis 55 Gew-%, ganz besonders bevorzugt in einem Bereich von 30 bis 50 Gew-%, noch bevorzugter in einem Bereich von 32,5 bis 45 Gew-%, insbesondere in einem Bereich von 35 bis 42,5 Gew-%, jeweils bezogen auf das Gesamtgewicht der wässrigen Dispersion oder Lösung (A), auf.

Vorzugsweise weist die erfindungsgemäß eingesetzte wässrige Dispersion oder Lösung (A) wenigstens eines elektrophoretisch abscheidbaren Bindemittels und gegebenenfalls wenigstens eines Vernetzungsmittels einen nichtflüchtigen Anteil, d.h. einen Festkörper-Anteil, in einem Bereich von 8 bis 30 Gew-%, besonders bevorzugt in einem Bereich von 9 bis 28 Gew-%, ganz besonders bevorzugt in einem Bereich von 10 bis 26 Gew-%, noch bevorzugter in einem Bereich von 11 bis 24 Gew-%, insbesondere in einem Bereich von 12 bis 22 Gew-% oder in einem Bereich von 13 bis 20 Gew.-%, jeweils bezogen auf das Gesamtgewicht der erfindungsgemäßen wässrigen Beschichtungszusammensetzung, auf.

Bestimmungsmethoden zur Bestimmung des Festkörper-Anteils sind dem Fachmann bekannt. Vorzugsweise wird der Festkörper-Anteil gemäß DIN EN ISO 3251 bestimmt.

Das wenigstens eine elektrophoretisch abscheidbare Bindemittel ist ein kathodisch abscheidbares Bindemittel. Dem Fachmann sind solche Bindemittel bekannt. Das erfindungsgemäß eingesetzte Bindemittel ist ein in Wasser lösbares oder dispergierbares Bindemittel.

Alle üblichen dem Fachmann bekannten kathodisch abscheidbaren Bindemittel eignen sich dabei als Bindemittel-Komponente der wässrigen Dispersion oder Lösung (A) der erfindungsgemäßen wässrigen Beschichtungszusammensetzung.

Die erfindungsgemäß eingesetzte wässrige Dispersion oder Lösung (A) umfasst wenigstens ein Bindemittel, welches reaktive funktionelle Gruppen aufweist, die eine Vernetzungsreaktion ermöglichen. Das Bindemittel ist dabei ein selbst-vernetzendes oder ein fremd-vernetzendes Bindemittel, vorzugsweise ein fremd-vernetzendes Bindemittel. Um eine Vernetzungsreaktion zu ermöglichen, enthält die erfindungsgemäß eingesetzte wässrige Dispersion oder Lösung (A) daher neben dem wenigstens einen Bindemittel vorzugsweise zudem wenigstens ein Vernetzungsmittel.

Das in der erfindungsgemäß eingesetzten wässrigen Dispersion oder Lösung (A) enthaltene Bindemittel bzw. das gegebenenfalls enthaltene Vernetzungsmittel ist vorzugsweise thermisch vernetzbar. Vorzugsweise sind das Bindemittel und das gegebenenfalls enthaltene Vernetzungsmittel beim Erwärmen auf Temperaturen oberhalb Raumtemperatur, d.h. oberhalb von 18-23°C vernetzbar. Vorzugsweise sind das Bindemittel und das gegebenenfalls enthaltene Vernetzungsmittel erst bei Ofentemperaturen $\geq$ 80°C, bevorzugter $\geq$ 110°C, besonders bevorzugt $\geq$ 130°C und ganz besonders bevorzugt $\geq$ 140°C vernetzbar. Besonders vorteilhaft sind das Bindemittel das gegebenenfalls enthaltene Vernetzungsmittel bei 100 bis 250°C, noch bevorzugter bei 125 bis 250°C und besonders bevorzugt bei 150 bis 250°C vernetzbar.

Die erfindungsgemäß eingesetzte wässrige Dispersion oder Lösung (A) umfasst wenigstens ein Bindemittel, welches reaktive funktionelle Gruppen aufweist, die in Kombination mit wenigstens einem Vernetzungsmittel eine Vernetzungsreaktion ermöglichen.

Jede übliche dem Fachmann bekannte vernetzbare reaktive funktionelle Gruppe kommt dabei in Betracht. Vorzugsweise weist das Bindemittel reaktive funktionelle Gruppen ausgewählt aus der Gruppe bestehend aus gegebenenfalls substituierten primären Amino-Gruppen, gegebenenfalls substituierten sekundären Amino-Gruppen, gegebenenfalls substituierten tertiären Amino-Gruppen, Hydroxyl-Gruppen, Thiol-Gruppen, Carboxyl-Gruppen, Gruppen, welche wenigstens eine C=C-Doppelbindung, wie beispielsweise Vinyl-Gruppen oder (Meth)acrylat-Gruppen, und Epoxid-Gruppen auf, wobei die primären, sekundären und tertiären Amino-Gruppen gegebenenfalls mit ein oder mehreren wie beispielsweise 2 oder 3 Substituenten jeweils unabhängig voneinander ausgewählt aus der Gruppe bestehend aus $C_{1-6}$-aliphatischen Resten wie beispielsweise Methyl, Ethyl, n-Propyl oder iso-Propyl substituiert sein können, wobei diese $C_{1-6}$-aliphatischen Reste wiederum gegebenenfalls mit 1, 2 oder 3 Substituenten jeweils unabhängig voneinander ausgewählt aus der Gruppe bestehend aus OH, $NH_2$, $NH(C_{1-6}\text{-Alkyl})$ und $N(C_{1-6}\text{-Alkyl})_2$ substituiert sein können. Besonders bevorzugt ist wenigstens ein Bindemittel, welches reaktive funktionelle Gruppen ausgewählt aus der Gruppe bestehend aus gegebenenfalls substituierten primären Amino-Gruppen, gegebenenfalls substituierten sekundären Amino-Gruppen, gegebenenfalls substituierten tertiären Amino-Gruppen, und Hydroxyl-Gruppen aufweist, wobei die primären, sekundären und tertiären Amino-Gruppen gegebenenfalls mit ein oder mehreren wie beispielsweise 2 oder 3 Substituenten jeweils unabhängig voneinander ausgewählt aus der Gruppe bestehend aus $C_{1-6}$-aliphatischen Resten wie beispielsweise Methyl, Ethyl, n-Propyl oder iso-Propyl substituiert sein können, wobei diese $C_{1-6}$-aliphatischen Reste wiederum gegebenenfalls mit 1, 2 oder 3 Substituenten jeweils unabhängig voneinander ausgewählt aus der Gruppe bestehend aus OH, $NH_2$, $NH(C_{1-6}\text{-Alkyl})$ und $N(C_{1-6}\text{-Alkyl})_2$ substituiert sein können.

Vorzugsweise ist das in der erfindungsgemäß eingesetzten wässrigen Dispersion oder Lösung (A) enthaltene Bindemittel wenigstens ein Epoxid-basiertes polymeres Harz, insbesondere wenigstens ein kationisches Epoxid-basiertes und Aminmodifiziertes Harz. Die Herstellung solcher kationischer Amin-modifizierter Epoxidbasierter Harze ist bekannt und wird beispielsweise in DE 35 18 732, DE 35 18 770, EP 0 004 090, EP 0 012 463, EP 0 961 797 B1 und EP 0 505 445 B1 beschrieben. Unter kationischen Epoxid-basierten Amin-modifizierten Harzen werden vorzugsweise Reaktionsprodukte aus wenigstens einem gegebenenfalls modifizierten Polyepoxid, d.h. wenigstens einer gegebenenfalls modifizierten Verbindung mit zwei oder mehr Epoxid-Gruppen, und wenigstens einem vorzugsweise wasserlöslichen Amin, vorzugsweise wenigstens einem solchen primären und/oder sekundären Amin verstanden. Besonders bevorzugte Polyepoxide sind dabei aus Polyphenolen und Epihalohydrinen hergestellte Polyglycidylether von Polyphenolen. Als Polyphenole können insbesondere Bisphenol A und/oder Bisphenol F eingesetzt werden. Weitere geeignete Polyepoxide sind Polyglycidylether von mehrwertigen Alkoholen, wie z. B. Ethylenglykol, Diethylenglykol, Triethylenglykol, 1,2-Propylenglykol- 1-4-Propylenglykol, 1,5-Pentandiol, 1,2,6-Hexantriol, Glycerin und Bis-(4-hydroxycyclohexyl)2,2propan. Unter modifizierten Polyepoxiden werden solche Polyepoxide verstanden, in denen ein Teil der reaktiven funktionellen Gruppen mit wenigstens einer modifizierenden Verbindung umgesetzt worden ist. Beispiele für solche modifizierenden Verbindungen sind:

a) Carboxylgruppenhaltige Verbindungen, wie gesättigte oder ungesättigte Monocarbonsäuren (z.B. Benzoesäure, Leinölfettsäure, 2-Ethylhexansäure, Versaticsäure), aliphatische, cycloaliphatische und/oder aromatische Dicarbonsäuren verschiedener Kettenlänge (z. B. Adipinsäure, Sebacinsäure, Isophthalsäure oder dimere Fettsäuren), Hydroxialkylcarbonsäuren (z.B. Milchsäure, Dimethylolpropionsäure) sowie carboxylgruppenhaltige Polyester oder

b) aminogruppenhaltige Verbindungen, wie Diethylamin oder Ethylhexylamin oder Diamine mit sekundären Aminogruppen, z. B. N,N'-Dialkylalkendiamine, wie Dimethylethylendiamin, N,N'-Dialkyl-polyoxialkylenamine, wie N,N'-dimethylpolyoxipropylendiamin, cyanalkylierte Alkylendiamine, wie Bis-N,N'-Cyanethyl-ethylendiamin, cyanalkylierte Polyoxialkylenamine, wie Bis-N,N'-Cyanethylpolyoxipropylendiamin, Polyaminoamide, wie z. B. Versamide, insbesondere endständige Aminogruppen enthaltende Umsetzungsprodukte aus Diaminen (z.B. Hexamethylendiamin), Polycarbonsäuren, insbesondere Dimerfettsäuren und Monocarbonsäuren, insbesondere Fettsäuren, oder das Umsetzungsprodukt von einem Mol Diaminohexan mit zwei Molen Monoglycidylether oder Monoglycidylester, speziell Glycidylester α-verzweigter Fettsäuren, wie der Versaticsäure, oder

c) hydroxylgruppenhaltige Verbindungen, wie Neopentylglykol, Bis-ethoxiliertes Neopentylglykol, Hydroxipivalinsäureneopentylglykolester, Dimethylhydantoin-N-N'-diethanol, Hexandiol-1,6, Hexandiol-2,5, 1,4-Bis- (hydroximethyl)cyclohexan, 1,1-Isopropyliden-bis-(p-phenoxy)-2-propanol, Trimethylolpropan, Pentaerythrit oder Aminoalkohole, wie Triethanolamin, Methyldiethanolamin oder hydroxylgruppenhaltige Alkylketimine, wie Aminomethylpropandiol-1,3-methyl-isobutylketimin oder Tris-(hydroximethyl)-aminomethan-cyclohexanonketimin sowie auch Polyglykolether, Polyesterpolyole, Polyetherpolyole, Polycaprolactonpolyole, Polycaprolactampolyole verschiedener Funktionalität und Molekulargewichte oder

d) gesättigte oder ungesättigte Fettsäuremethylester, die in Gegenwart von Natriummethylat mit Hydroxylgruppen der Epoxidharze umgeestert werden.

Beispiele für einsetzbare Amine sind Mono- und Dialkylamine, wie Methylamin, Ethylamin, Propylamin, Butylamin, Dimethylamin, Diethylamin, Dipropylamin, Methylbutylamin, Alkanolamine, wie z. B. Methylethanolamin oder Diethanolamin, Dialkylaminoalkylamine, wie z. B. Dimethylaminoethylamin, Diethylaminopropylamin, oder Dimethylaminopropylamin. Die einsetzbaren Amine können auch noch andere funktionelle Gruppen enthalten, sofern diese die Umsetzung des Amins mit der Epoxidgruppe des gegebenenfalls modifizierten Polyepoxids nicht stören und auch nicht zu einer Gelierung der Reaktionsmischung führen. Bevorzugt werden sekundäre Amine eingesetzt. Die für die Wasserverdünnbarkeit und elektrische Abscheidung erforderlichen Ladungen können durch Protonierung mit wasserlöslichen Säuren (z.B. Borsäure, Ameisensäure, Essigsäure, Milchsäure, bevorzugt Essigsäure) erzeugt werden. Eine weitere Möglichkeit zur Einführung kationischer Gruppen in die das gegebenenfalls modifizierte Polyepoxid besteht in der Umsetzung von Epoxidgruppen des Polyepoxids mit Amin-Salzen.

Vorzugsweise umfasst die erfindungsgemäß eingesetzte wässrige Dispersion oder Lösung (A) neben dem wenigstens einen elektrophoretisch abscheidbaren Bindemittel wenigstens ein Vernetzungsmittel auf, welches eine Vernetzungsreaktion mit den reaktiven funktionellen Gruppen des Bindemittels ermöglicht.

Alle dem Fachmann bekannten üblichen Vernetzungsmittel können eingesetzt werden wie beispielsweise Phenoplaste, polyfunktionelle Mannich-Basen, Melaminharze, Benzoguanamin-Harze, Epoxide, freie Polyisocyanate, und/oder blockierte Polyisocyanate, insbesondere blockierte Polyisocyanate.

Ein besonders bevorzugtes Vernetzungsmittel ist ein blockiertes Polyisocyanat. Als blockierte Polyisocyanate können beliebige Polyisocyanate wie beispielsweise Diisocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°, aber reagiert.

Bei der Herstellung der blockierten Polyisocyanate können beliebige für die Vernetzung geeignete organische Polyisocyanate verwendet werden. Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methanol-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat ($H_{12}$MDI), 4,4'-Diisocyanato-3,3',5,5'-tetramethyldicyclohexylmethan, 4,4'-Diisocyanato-2,2',3,3',5,5',6,6'-octamethyldicyclohexylmethan, $\omega,\omega$'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel in Betracht kommenden organischen Polyisocyanate können auch Präpolymere sein, die sich beispielsweise von einem Polyol einschliesslich eines Polyetherpolyols oder eines Polyesterpolyols ableiten. Ganz besonders bevorzugt sind 4-Toluoldiisocyanat und/oder 2,6-Toluoldiisocyanat (TDI), bzw. Isomerengemische aus 2,4-Toluoldiisocyanat und 2,6-Toluoldiisocyanat und/oder Diphenylmethandiisocyanat (MDI).

Für die Blockierung der Polyisocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol.

Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Vorzugsweise liegt das relative Gewichtsverhältnis des wenigstens einen Bindemittels und des wenigstens einen Vernetzungsmittels in der erfindungsgemäß eingesetzten wässrige Dispersion oder Lösung (A) zueinander in einem Bereich von 4:1 bis 1,1:1, besonders bevorzugt in einem Bereich von 3:1 bis 1,1:1, ganz besonders bevorzugt in einem Bereich von 2,5:1 bis 1,1:1, insbesondere in einem Bereich von 2,1:1 bis 1,1:1, jeweils bezogen auf den Festkörper-Anteil des wenigstens einen Bindemittels und des wenigstens einen Vernetzungsmittel in der wässrigen Dispersion oder Lösung (A) der erfindungsgemäßen Beschichtungszusammensetzung.

In einer anderen bevorzugten Ausführungsform liegt das relative Gewichtsverhältnis des wenigstens einen Bindemittels und des wenigstens einen Vernetzungsmittels in der erfindungsgemäß eingesetzten wässrige Dispersion oder Lösung (A) zueinander in einem Bereich von 4:1 bis 1,5:1, besonders bevorzugt in einem Bereich von 3:1 bis 1,5:1, ganz besonders bevorzugt in einem Bereich von 2,5:1 bis 1,5:1, insbesondere in einem Bereich von 2,1:1 bis 1,5:1, jeweils bezogen auf den Festkörper-Anteil des wenigstens einen Bindemittels und des wenigstens einen Vernetzungsmittel in der wässrigen Dispersion oder Lösung (A) der erfindungsgemäßen Beschichtungszusammensetzung.

Die erfindungsgemäße wässrige Beschichtungszusammensetzung kann zudem je nach erwünschter Anwendung wenigstens ein Pigment (C) enthalten.

Vorzugsweise ist ein solches in der erfindungsgemäßen wässrigen Beschichtungszusammensetzung enthaltenes Pigment (C) ausgewählt aus der Gruppe bestehend aus organischen und anorganischen, farbgebenden und füllenden Pigmenten.

Das wenigstens eine Pigment (C) kann dabei als Bestandteil der wässrigen Lösung oder Dispersion (A) vorliegen.

Alternativ kann das wenigstens eine Pigment (C) auch in Form einer weiteren von (A) verschiedenen wässrigen Dispersion oder Lösung in die erfindungsgemäße Beschichtungszusammensetzung eingearbeitet werden. Innerhalb dieser Ausführungsform kann die entsprechende Pigment-haltige wässrige Dispersion oder Lösung zudem wenigstens ein Bindemittel enthalten.

Beispiele für geeignete anorganische farbgebende Pigmente (C) sind Weißpigmente wie Zinkoxid, Zinksulfid, Titandioxid, Antimonoxid oder Lithopone; Schwarzpigmente wie Ruß, Eisen-Mangan-Schwarz oder Spinellschwarz; Buntpigmente wie Kobaltgrün oder Ultramaringrün, Kobaltblau, Ultramarinblau oder Manganblau, Ultramarinviolett oder Kobalt- und Manganviolett, Eisenoxidrot, Molybdatrot oder Ultramarinrot; Eisenoxidbraun, Mischbraun, Spinell- und Korundphasen; oder Eisenoxidgelb, Nickeltitangelb, oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen.

Der Pigment-Gehalt in den erfindungsgemäßen wässrigen Beschichtungszusammensetzungen kann je nach Verwendungszweck und nach der Natur der Pigmente (C) variieren. Vorzugsweise liegt der Gehalt, bezogen auf das Gesamtgewicht der erfindungsgemäßen wässrigen Beschichtungszusammensetzung im Bereich von 0,1 bis 30 Gew.-% oder im Bereich von 0,5 bis 20 Gew.-%, besonders bevorzugt im Bereich von 1,0 bis 15 Gew.-%, ganz besonders bevorzugt im Bereich von 1,5 bis 10 Gew.-% und insbesondere im Bereich von 2,0 bis 5,0 Gew.-% oder im Bereich von 2,0 bis 4,0 Gew.-% oder im Bereich von 2,0 bis 3,5 Gew.-%.

Die erfindungsgemäße wässrige Beschichtungszusammensetzung kann je nach erwünschter Anwendung ein oder mehrere üblicherweise eingesetzte Additive (D) enthalten. Vorzugsweise sind diese Additive (D) ausgewählt aus der Gruppe bestehend aus Benetzungsmitteln, Emulgatoren, Dispergiermitteln, oberflächenaktiven Verbindungen wie Tensiden, Verlaufshilfsmitteln, Löslichkeitsvermittlern, Entschäumungsmitteln, Rheologiehilfsmitteln, Antioxidantien, Stabilisierungsmitteln, vorzugsweise Hitze-Stabilisatoren, Prozess-Stabilisatoren und UV- und/oder Licht-Stabilisatoren, Katalysatoren, Füllstoffen, Wachsen, Flexibilisierungsmitten, Weichmachern und Gemischen aus den vorstehend genannten Additiven. Der Additiv-Gehalt kann je nach Verwendungszweck sehr breit variieren. Vorzugsweise liegt der Gehalt, bezogen auf das Gesamtgewicht der erfindungsgemäßen wässrigen Beschichtungszusammensetzung, bei 0,1 bis 20,0 Gew.-%, bevorzugt bei 0,1 bis 15,0 Gew.-%, besonders bevorzugt bei 0,1 bis 10,0 Gew.-%, ganz besonders bevorzugt bei 0,1 bis 5,0 Gew.-% und insbesondere bei 0,1 bis 2,5 Gew.-%.

Das wenigstens eine Additiv (D) kann dabei als Bestandteil der wässrigen Lösung oder Dispersion (A) vorliegen. Alternativ kann das wenigstens eine Additiv (D) auch in Form einer weiteren von (A) verschiedenen wässrigen Dispersion oder Lösung in die erfindungsgemäße Beschichtungszusammensetzung eingearbeitet werden, beispielsweise innerhalb einer wässrigen Dispersion oder Lösung, die wenigstens ein Pigment (D) und gegebenenfalls zudem wenigstens ein Bindemittel enthält.

Vorzugsweise kann die erfindungsgemäße wässrige Beschichtungszusammensetzung zudem wenigstens eine Komponente (E) enthalten. Bei der optional vorhandenen Komponente (E) handelt es sich um wenigstens eine Metallionen-haltige Verbindung und/oder um wenigstens eine zur Freisetzung von Metallionen geeignete metallatomhaltige Verbindung, wobei die Metallionen Ionen von Metallatomen ausgewählt aus der Gruppe bestehend aus Zr, Ti, Co, V, W, Mo, Cu, Zn, In, Bi, Y und Lanthaniden sind, besonders bevorzugt Bi, und wobei die Metallionen in der Beschichtungszusammensetzung in einer Konzentration im Bereich von 30 bis 20 000 ppm, bezogen auf das Gesamtgewicht der Beschichtungszusammensetzung in Gew.-%, enthalten sind. Besonders bevorzugt ist die Komponente (E) wenigstens eine Bismutionen-haltige Verbindung und/oder wenigstens eine zur Freisetzung von Bismutionen geeignete bismutatomhaltige Verbindung, wobei die Bismutionen in der Beschichtungszusammensetzung in einer Konzentration im Bereich von wenigstens 200 ppm, vorzugsweise wenigstens 500 mm, besonders bevorzugt 1 000 ppm, aber jeweils nicht mehr als 20 000 ppm, vorzugsweise jeweils nicht mehr als 10 000 ppm und insbesondere jeweils nicht mehr als 5 000 ppm, jeweils bezogen auf das Gesamtgewicht der Beschichtungszusammensetzung in Gew.-%, enthalten sind.

Die wenigstens eine Komponente (E) kann dabei als Bestandteil der wässrigen Lösung oder Dispersion (A) vorliegen. Alternativ kann die wenigstens eine Komponente (E) auch in Form einer weiteren von (A) verschiedenen wässrigen Dispersion oder Lösung in die erfindungsgemäße Beschichtungszusammensetzung eingearbeitet werden, beispielsweise innerhalb einer wässrigen Dispersion oder Lösung, die wenigstens ein Pigment (D) und gegebenenfalls zudem wenigstens ein Bindemittel enthält.

### Komponente (B)

Die erfindungsgemäße wässrige Beschichtungszusammensetzung umfasst wenigstens eine wässrige Sol-Gel-Zusammensetzung (B), die durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung erhältlich ist.

Vorzugsweise liegt die zur Herstellung der erfindungsgemäßen Beschichtungszusammensetzung erfindungsgemäß eingesetzte wässrige Sol-Gel-Zusammensetzung (B) in Form einer wässrigen kolloiden Lösung oder wässrigen Dispersion, insbesondere in Form einer wässrigen kolloiden Lösung vor.

Vorzugsweise weist die zur Herstellung der erfindungsgemäßen Beschichtungszusammensetzung eingesetzte wässrige Sol-Gel-Zusammensetzung (B) einen pH-Wert im Bereich von 2,0 bis 10,0, besonders bevorzugt von im Bereich von 2,5 bis 8,5 oder im Bereich von 2,5 bis 8,0, ganz besonders bevorzugt von im Bereich von 3,0 bis 7,0 oder im Bereich von 3,0 bis 6,5 oder im Bereich von 3,0 bis 6,0, insbesondere im Bereich von 3,5 bis 6,0 oder im Bereich von 3,5 bis 5,5, insbesondere bevorzugt im Bereich von 3,7 bis 5,5, am meisten bevorzugt im Bereich von 3,9 bis 5,5 oder 4,0 bis 5,5 auf. Methoden zur Einstellung von pH-Werten in wässrigen Zusammensetzungen sind dem Fachmann bekannt. Vorzugsweise erfolgt die Einstellung des erwünschten pH-Werts durch Zugabe wenigstens einer Säure, besonders bevorzugt wenigstens einer anorganischen und/oder wenigstens einer organischen Säure. Geeignete anorganische Säuren sind beispielsweise Salzsäure, Schwefelsäure, Phosphorsäure und/oder Salpetersäure. Eine geeignete organische Säure ist beispielsweise Propionsäure, Milchsäure, Essigsäure und/oder Ameisensäure. Ganz besonders bevorzugt erfolgt die Einstellung des erwünschten pH-Werts durch Zugabe von Ameisensäure.

Dem Fachmann sind die Begriffe "Sol-Gel-Zusammensetzung", "Sol-Gel" sowie die Herstellung von Sol-Gel-Zusammensetzungen und Sol-Gelen bekannt, beispielsweise aus D. Wang et al., Progress in Organic Coatings 2009, 64, 327-338 oder S. Zheng et al., J. Sol-Gel. Sci. Technol. 2010, 54, 174-187.

Unter einer wässrigen "Sol-Gel-Zusammensetzung" im Sinne der vorliegenden Erfindung wird eine wässrige Zusammensetzung verstanden, zu deren Herstellung wenigstens eine Ausgangsverbindung, welche wenigstens ein Metallatom und/oder Halbmetallatom wie beispielsweise $M^1$ und/oder $M^2$ und wenigstens zwei hydrolysierbare Gruppen wie beispielsweise zwei hydrolysierbare Gruppen $X^1$ aufweist, und welche ferner wenigstens einen nicht hydrolysierbaren organischen Rest wie beispielsweise $R^1$ aufweist, mit Wasser unter Hydrolyse und Kondensation umgesetzt wird. Die wenigstens zwei hydrolysierbaren Gruppen sind dabei vorzugsweise jeweils direkt an das in der wenigstens einen Ausgangsverbindung enthaltene wenigstens eine Metallatom und/oder wenigstens eine Halbmetallatom jeweils mittels einer Einfachbindung gebunden. Aufgrund der Gegenwart des nicht hydrolysierbaren organischen Restes wie beispielsweise $R^1$ kann eine solche erfindungsgemäß eingesetzte Sol-Gel-Zusammensetzung auch als "Sol-Gel-Hybrid-Zusammensetzung" bezeichnet werden.

Bei dieser Umsetzung werden in einem ersten Hydrolyse-Schritt die wenigstens zwei hydrolysierbaren Gruppen abgespalten und innerhalb der wenigstens einen Ausgangsverbindung durch OH-Gruppen ersetzt, wodurch die Ausbildung von Metall-OH-Bindungen bzw. Halbmetall-OH-Bindungen innerhalb der im ersten Schritt eingesetzten wenigstens einen Ausgangsverbindung resultiert (Hydrolyse-Schritt). In einem zweiten Schritt erfolgt eine Kondensation zweier im ersten Schritt gebildeter Moleküle beispielsweise durch Reaktion jeweils einer der so gebildeten Metall-OH-Bindungen des einen Moleküls mit einer der so gebildeten Metall-OH-Bindungen des zweiten Moleküls unter Wasserabspaltung (Kondensations-Schritt). Das so gebildete Molekül, welches beispielsweise wenigstens eine Metall-O-Metall-Gruppe (oder Metall-O-Halbmetall-Gruppe oder Halbmetall-O-Halbmetall-Gruppe) und zudem insgesamt wenigstens zwei hydrolysierbare Gruppen aufweist, kann dann erneut hydrolysiert werden und analog mit weiteren nach dem ersten Hydrolyse-Schritt erhältlichen Verbindungen reagieren und die dann analog gebildete resultierende Verbindung entsprechend weiterreagieren, so dass es zur Ausbildung von Ketten und insbesondere von zwei- oder dreidimensionalen Strukturen kommt. Dieses wenigstens zweischrittige Verfahren umfassend wenigstens den ersten Hydrolyse-Schritt und wenigstens den zweiten Kondensations-Schritt wird als Sol-Gel-Verfahren oder als Sol-Gel-Prozess bezeichnet. Je nach Vernetzungsgrad durch die Kondensation entsteht so ein Sol bzw. ein Gel, wodurch die wässrige Zusammensetzung als Sol-Gel-Zusammensetzung bezeichnet wird. Dabei wird vorzugsweise unter einer reinen Sol-Zusammensetzung eine Zusammensetzung verstanden, in der die Reaktionsprodukte kolloidal gelöst vorliegen. Eine Sol-Zusammensetzung zeichnet sich durch eine niedrigere Viskosität aus als eine Gel-Zusammensetzung. Vorzugsweise wird unter einer reinen Gel-Zusammensetzung eine Zusammensetzung verstanden, die sich durch eine hohe Viskosität auszeichnet und die eine Gel-Struktur aufweist. Der Übergang von einer Sol- zu einer Gel-Zusammensetzung ist vorzugsweise durch einen sprunghaften Anstieg der Viskosität gekennzeichnet. Die erfindungsgemäß eingesetzte Sol-Gel-Zusammensetzung (B) ist vorzugsweise weder eine reine Sol-Zusammensetzung noch eine reine Gel-Zusammensetzung, sondern eine Sol-Gel-Zusammensetzung.

Vorzugsweise wird die zur Herstellung der erfindungsgemäß eingesetzten wässrigen Sol-Gel-Zusammensetzung (B) benötigte wenigstens eine Ausgangsverbindung dabei durch Einrühren in Wasser oder Zugabe von Wasser zu der wenigstens einen Ausgangsverbindung hergestellt. Dies erfolgt vorzugsweise bei einer Temperatur, die im Bereich von 15°C bis 40°C oder im Bereich von 15°C bis 37°C, noch bevorzugter im Bereich von 17°C bis 35°C, am meisten bevorzugt im Bereich von 18°C bis 30°C oder im Bereich von 18°C bis 25°C, liegt. Um die Herstellung der erfindungsgemäß eingesetzten wässrigen Sol-Gel-Zusammensetzung (B) zu beschleunigen, kann die Herstellung gegebenenfalls auch bei höheren Temperaturen als 40°C durchgeführt werden, beispielsweise bei einer Temperatur von bis zu 80°C, d.h. beispielsweise in einem Bereich von 15°C bis 80°C.

Vorzugsweise wird die so erhaltene wässrige Sol-Gel-Zusammensetzung (B) - bevor sie zur Herstellung der erfindungsgemäßen wässrigen Beschichtungszusammensetzung eingesetzt wird - über eine Dauer im Bereich von 2 Stunden bis 28 Tagen, besonders bevorzugt über eine Dauer im Bereich von 3 Stunden bis 26 Tagen, ganz besonders bevorzugt über eine Dauer im Bereich von 5 Stunden bis 22 Tagen oder über eine Dauer im Bereich von 6 Stunden bis 20 Tagen, noch bevorzugter über eine Dauer im Bereich von 7 Stunden bis 18 Tagen, insbesondere über eine Dauer im Bereich von 8 Stunden bis 16 Tagen, bei einer Temperatur von 18-25 °C ruhen gelassen, um eine ausreichende Hydrolyse und Kondensation zu gewährleisten. In einer anderen bevorzugten Ausführungsform wird die so erhaltene wässrige Sol-Gel-Zusammensetzung (B) - bevor sie zur Herstellung der erfindungsgemäßen wässrigen Beschichtungszusammensetzung eingesetzt wird - über eine Dauer von wenigstens 4 Stunden, vorzugsweise von wenigstens 6 Stunden oder von wenigstens 8 Stunden oder von wenigstens 12 Stunden oder von wenigstens 16 Stunden oder von wenigstens 20 Stunden oder von wenigstens 24 Stunden, besonders bevorzugt über eine Dauer von wenigstens 2 Tagen oder von wenigstens 3 Tagen oder von wenigstens 4 Tagen oder von wenigstens 6 Tagen oder von wenigstens 8 Tagen oder von wenigstens 10 Tagen oder von wenigstens 12 Tagen oder von wenigstens 14 Tagen bei einer Temperatur von 18-25 °C ruhen gelassen, um eine ausreichende Hydrolyse und Kondensation zu gewährleisten.

Die zur Herstellung der wässrigen Sol-Gel-Zusammensetzung (B) eingesetzte wenigstens eine Ausgangsverbindung, welche wenigstens ein Metallatom und/oder Halbmetallatom wie beispielsweise $M^1$ und/oder $M^2$ und wenigstens

zwei hydrolysierbare Gruppen wie beispielsweise wenigstens zwei hydrolysierbare Gruppen $X^1$ aufweist, weist zudem wenigstens einen nicht hydrolysierbaren organischen Rest auf. Dieser nicht hydrolysierbare organische Rest wie beispielsweise ein entsprechender Rest $R^1$ ist vorzugsweise direkt an das in der wenigstens einen Ausgangsverbindung enthaltene Metallatom und/oder Halbmetallatom wie beispielsweise $M^1$ und/oder $M^2$ mittels einer Einfachbindung gebunden. Somit kommt es bei dem wenigstens zweischrittigen Verfahren umfassend wenigstens den ersten Hydrolyse-Schritt und wenigstens den zweiten Kondensations-Schritt zur Ausbildung von Ketten und insbesondere von zwei- oder dreidimensionalen Strukturen, welche sowohl anorganische als auch organische Gruppen aufweisen. Somit kann die so erhaltene Sol-Gel-Zusammensetzung als anorganisch-organische Sol-Gel-Hybrid-Zusammensetzung bezeichnet werden.

Gegebenenfalls enthält der wenigstens eine nicht hydrolysierbare organische Rest wie beispielsweise der Rest $R^1$ wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen. Die Epoxid-Gruppe kann dabei durch Umsetzung mit Wasser in zwei Hydroxyl-Gruppen überführt werden, welche dann als reaktive funktionelle Gruppen fungieren können.

Der Ausdruck "(Meth)acryl" umfasst im Sinne der vorliegenden Erfindung jeweils die Bedeutungen "Methacryl" und/oder "Acryl".

Unter dem Ausdruck "nicht hydrolysierbarer organischer Rest, welcher wenigstens eine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest wenigstens eine solche funktionelle Gruppe aufweist, die eine Reaktivität gegenüber den gegebenenfalls im Bindemittel (A) der erfindungsgemäßen Beschichtungszusammensetzung und/oder den im gegebenenfalls in der der erfindungsgemäßen Beschichtungszusammensetzung vorhandenen Vernetzungsmittel (C) enthaltenen reaktiven funktionellen Gruppen aufweist. Durch eine Reaktion entsprechender funktioneller Gruppen kann es dabei zur Ausbildung von kovalenten Bindungen kommen.

Der wenigstens eine nicht hydrolysierbare organische Rest wie beispielsweise der Rest $R^1$ muss jedoch nicht zwingend wenigstens eine reaktive funktionelle Gruppe aufweisen, sondern kann auch ein nicht hydrolysierbarer organischer Rest sein, der keine reaktiven funktionellen Gruppe aufweist.

Unter dem Ausdruck "nicht hydrolysierbarer organischer Rest, welcher keine reaktive funktionelle Gruppe aufweist" wird im Zusammenhang mit einem nicht hydrolysierbaren organischen Rest wie beispielsweise dem Rest $R^1$ im Sinne der vorliegenden Erfindung vorzugsweise verstanden, dass der nicht hydrolysierbare organische Rest keine solche funktionelle Gruppe aufweist, die eine Reaktivität gegenüber den gegebenenfalls im Bindemittel (A) der erfindungsgemäßen Beschichtungszusammensetzung und/oder den im gegebenenfalls in der der erfindungsgemäßen Beschichtungszusammensetzung vorhandenen Vernetzungsmittel enthaltenen reaktiven funktionellen Gruppen aufweist.

Eine so erhaltene wässrige Sol-Gel-Zusammensetzung (B), in der die wenigstens eine Ausgangsverbindung, welche neben den wenigstens zwei hydrolysierbaren Gruppen wie beispielsweise wenigstens zwei hydrolysierbaren Gruppen $X^1$ wenigstens einen nicht hydrolysierbaren organischen Rest wie beispielsweise $R^1$ aufweist, zeichnet sich insbesondere dadurch aus, dass bei ihrer Herstellung kein kolloidales Hydroxid oder kolloidales Oxid, welches beispielsweise in EP 1 510 558 A1 offenbart ist, sondern eine organisch-anorganische Hybrid-Sol-Gel-Zusammensetzung entsteht, welche sich vorteilhafter in die erfindungsgemäße Beschichtungszusammensetzung einbringen lässt als ein kolloidales Hydroxid oder kolloidales Oxid gemäß EP 1 510 558 A1.

Vorzugsweise weist die zur Herstellung der erfindungsgemäßen wässrigen Beschichtungszusammensetzung eingesetzte wässrige Sol-Gel-Zusammensetzung (B) wenigstens zwei unterschiedliche nicht hydrolysierbare organische Reste auf, wie beispielsweise wenigstens zwei unterschiedliche nicht hydrolysierbare organische Reste $R^1$, wobei einer dieser Reste ein $C_{1-10}$-aliphatischer Rest ist, der wenigstens eine Hydroxyl-Gruppe als wenigstens eine reaktive funktionelle Gruppe aufweist und der verbleibende nicht hydrolysierbare organische Rest ein $C_{1-10}$-aliphatischer Rest ist, der wenigstens eine primäre Amino-Gruppe oder wenigstens eine sekundäre Amino-Gruppe als wenigstens eine reaktive funktionelle Gruppe aufweist. Zur Herstellung einer solchen erfindungsgemäß eingesetzten wässrigen Sol-Gel-Zusammensetzung (B) eignen sich wenigstens zwei voneinander verschiedene Ausgangsverbindungen, die mit Wasser einer Hydrolyse und Kondensation unterworfen werden, wobei jede der Ausgangsverbindungen einen $C_{1-10}$-aliphatischen Rest als einen nicht hydrolysierbaren organischen Rest wie beispielsweise $R^1$ aufweist, von denen einer wenigstens eine Epoxid-Gruppe als eine reaktive funktionelle Gruppe aufweist und der andere wenigstens eine primäre Amino-Gruppe oder wenigstens eine sekundäre Amino-Gruppe als reaktive funktionelle Gruppe aufweist. Die Epoxid-Gruppe des nicht hydrolysierbaren organischen Restes wird dabei durch Umsetzung mit Wasser in einen entsprechenden organischen Rest mit einer $\alpha,\beta$-Dihydroxy-Gruppe überführt.

In einer bevorzugten Ausführungsform ist die zur Herstellung der erfindungsgemäßen wässrigen Beschichtungszusammensetzung eingesetzte wässrige Sol-Gel-Zusammensetzung (B) erhältlich durch Umsetzung von wenigstens zwei Ausgangsverbindungen, welche jeweils unabhängig voneinander wenigstens ein Metallatom und/oder Halbmetallatom wie beispielsweise $M^1$ und zudem jeweils unabhängig voneinander wenigstens zwei hydrolysierbare Gruppen wie beispielsweise wenigstens zwei hydrolysierbare Gruppen $X^1$ aufweisen,

wobei die wenigstens zwei hydrolysierbaren Gruppen vorzugsweise jeweils direkt an das in den wenigstens zwei Ausgangsverbindungen jeweils enthaltene Metallatom und/oder Halbmetallatom mittels Einfachbindung gebunden sind,

mit Wasser,
wobei wenigstens eine der wenigstens zwei Ausgangsverbindungen neben den wenigstens zwei hydrolysierbaren Gruppen zudem wenigstens eine nicht hydrolysierbare Gruppe, besonders bevorzugt wenigstens einen nicht hydrolysierbaren organischen Rest wie beispielsweise dem Rest $R^1$ aufweist, wobei diese nicht hydrolysierbare Gruppe insbesondere direkt an das in der wenigstens einen Ausgangsverbindung enthaltene Metallatom und/oder Halbmetallatom wie $M^1$ mittels einer Einfachbindung gebunden ist und dabei gegebenenfalls wenigstens eine reaktive funktionelle Gruppe, welche vorzugsweise ausgewählt ist aus der Gruppe bestehend aus primären Amino-Gruppen, sekundären Amino-Gruppen, Epoxid-Gruppen, Thiol-Gruppen, Isocyanat-Gruppen, phosphorhaltige Gruppen wie Phosphonat-Gruppen, Silan-Gruppen, die gegebenenfalls wiederum wenigstens einen nicht hydrolysierbaren organischen Rest aufweisen können, welcher gegebenenfalls wenigstens eine reaktive funktionelle Gruppe aufweist, und Gruppen, die eine ethylenisch ungesättige Doppelbindung aufweisen wie Vinyl-Gruppen oder (Meth)acryl-Gruppen, ganz besonders bevorzugt ausgewählt ist aus der Gruppe bestehend aus primären Amino-Gruppen, sekundären Amino-Gruppen, Epoxid-Gruppen, Thiol-Gruppen, und Gruppen, die eine ethylenisch ungesättige Doppelbindung aufweisen wie Vinyl-Gruppen oder (Meth)acryl-Gruppen, insbesondere ausgewählt ist aus der Gruppe bestehend aus primären Amino-Gruppen und Epoxid-Gruppen, enthält.

Vorzugsweise ist die zur Herstellung der -erfindungsgemäßen wässrigen Beschichtungszusammensetzung eingesetzte wässrige Sol-Gel-Zusammensetzung (B) erhältlich durch Umsetzung von wenigstens einer Verbindung

$$(A1) \qquad (M^1)^x(X^1)_a(R^1),$$

und/oder

$$(A2) \qquad (M^2)^y(X^2)_b(R^2)(R^3),$$

vorzugsweise von wenigstens einer Verbindung (A1),
mit Wasser, worin

$M^1$ und $M^2$ jeweils unabhängig voneinander für ein Metallatom oder ein Halbmetallatom stehen, wobei vorzugsweise wenigstens eine der Variablen $M^1$ und $M^2$, besonders bevorzugt beide der Variablen $M^1$ und $M^2$, für Si steht/stehen,

$X^1$ und $X^2$ jeweils unabhängig voneinander für eine hydrolysierbare Gruppe stehen,

$x$ für die Wertigkeit des Metallatoms oder Halbmetallatoms $M^1$ steht, vorzugsweise jeweils für +3 oder +4 steht,

$y$ für die Wertigkeit des Metallatoms oder Halbmetallatoms $M^2$ steht, vorzugsweise jeweils für +3 oder +4 steht,

$R^1$ für $X^1$, einen nicht hydrolysierbaren organischen Rest, für $(T)(M^1)^x(X^1)_c$ oder für $(U)[(M^1)^x(X^1)_c]_2$, steht, vorzugsweise für einen nicht hydrolysierbaren organischen Rest, steht,

$R^2$ für einen nicht hydrolysierbaren organischen Rest steht,

$R^3$ für einen nicht hydrolysierbaren organischen Rest, für $(T)(M^1)^x(X^1)_c$, für $(U)[(M^1)^x(X^1)_c]_2$, für $(V)(M^2)^y(X^2)_d(R^2)$ oder für $(W)[(M^2)^y(X^2)_d(R^2)]_2$ steht, vorzugsweise für einen nicht hydrolysierbaren organischen Rest, steht,

a           für x steht, wenn $R^1$ für $X^1$ steht oder

a           für x-1 steht, wenn $R^1$ für einen nicht hydrolysierbaren organischen Rest, für $(T)(M^1)^x(X^1)_c$ oder für $(U)[(M^1)^x(X^1)_c]_2$ steht, jeweils unter der Voraussetzung, dass a mindestens für 2 steht,

b           für y-2 steht,
            unter der Voraussetzung, dass b mindestens für 2 steht,

T, U, V und W   jeweils unabhängig voneinander für einen Rest stehen, der 1 bis 30 Kohlenstoffatome aufweist und gegebenenfalls bis zu 10 Heteroatome und Heteroatomgruppen ausgewählt aus der Gruppe bestehend aus O, S und N aufweisen kann,

c           für x-1 steht, vorzugsweise unter der Voraussetzung, dass c mindestens für 2 steht, und

d           für y-2 steht, vorzugsweise unter der Voraussetzung, dass d mindestens für 2 steht,

mit Wasser.

Dem Fachmann ist der Begriff einer "hydrolysierbaren Gruppe" bekannt. Jede übliche dem Fachmann bekannte hydrolysierbare Gruppe wie beispielsweise $X^1$ oder $X^2$ kann als Bestandteil der wenigstens einen zur Herstellung der wässrigen Sol-Gel-Zusammensetzung eingesetzten Ausgangsverbindung, insbesondere der wenigstens einen Komponente (A1) und/oder (A2), dienen.

Unter einer "hydrolysierbaren Gruppe" wie beispielsweise der Gruppen $X^1$ und $X^2$ wird im Sinne der vorliegenden Erfindung vorzugsweise eine hydrolysierbare Gruppe ausgewählt aus der Gruppe bestehend aus Halogeniden, vorzugsweise Fluroriden, Chloriden, Bromiden und Iodiden, insbesondere Fluoriden und Chloriden, Alkoxy-Gruppen, vorzugsweise Alkoxy-Gruppen O-$R^a$, worin $R^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert-Butyl, steht, Carboxylat-Gruppen, vorzugsweise $C_{1-6}$-Carboxylat-Gruppen, insbesondere Carboxylat-Gruppen ausgewählt aus der Gruppe bestehend aus Acetat und besonders bevorzugt Diketonat-Gruppen ausgewählt aus der Gruppe bestehend aus Acetylacetonat, Acetonylacetonat und Diacetylat.

Besonders bevorzugt wird unter einer "hydrolysierbaren Gruppe" wie beispielsweise der der Gruppen $X^1$ und $X^2$ eine Alkoxy-Gruppe, vorzugsweise eine Alkoxy-Gruppe O-$R^a$, worin $R^a$ für einen gegebenenfalls mit einer $C_{1-6}$-Alkoxy-Gruppe substituierten $C_{1-16}$-aliphatischen Rest, vorzugsweise $C_{1-10}$-aliphatischen Rest, besonders bevorzugt $C_{1-6}$-aliphatischen Rest, insbesondere $C_{1-6}$-Alkyl-Rest wie für Methyl, Ethyl, n-Propyl, iso-Propyl, n-Butyl, iso-Butyl, oder tert.-Butyl, steht, verstanden.

Dem Fachmann ist der Begriff "Wertigkeit" im Zusammenhang mit Metallatomen oder Halbmetallatomen wie $M^1$ und $M^2$ bekannt. Vorzugsweise bezeichnet die Wertigkeit im Sinne der vorliegenden Erfindung die Oxidationszahl des jeweiligen Metallatoms oder Halbmetallatoms wie beispielsweise $M^1$ und $M^2$. Bevorzugt sind Wertigkeiten für x und y - jeweils unabhängig voneinander - von +2, +3 und +4, insbesondere von +3 und +4.

Geeignete Metallatome wie beispielsweise $M^1$ und $M^2$ sind alle üblichen Metallatome einschließlich Übergangsmetallatomen, die Bestandteil der wenigstens einen Ausgangsverbindung, insbesondere (A1) und/oder (A2), wie beispielsweise Al, Ti, Zr, und Fe, vorzugsweise Ti und Zr. Geeignete Halbmetallatome wie beispielsweise $M^1$ und $M^2$ sind alle üblichen Halbmetallatome, die Bestandteil der wenigstens einen Ausgangsverbindung, insbesondere (A1) und/oder (A2), sein können, wie beispielsweise B und Si, vorzugsweise Si.

Vorzugsweise sind die Metallatome und Halbmetallatome wie beispielsweise $M^1$ und $M^2$ jeweils unabhängig voneinander ausgewählt aus der Gruppe bestehend aus Al, Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si. Insbesondere bedeuten die Metallatome und Halbmetallatome wie beispielsweise $M^1$ und $M^2$ jeweils Si.

Insbesondere ist $M^1$ ausgewählt aus der Gruppe bestehend aus Al, Ti, Zr, Fe, B und Si, besonders bevorzugt ausgewählt aus der Gruppe bestehend aus Ti, Zr und Si, ganz besonders bevorzugt ausgewählt aus der Gruppe bestehend aus Zr und Si, insbesondere bedeutet $M^1$ Si. Vorzugsweise bedeutet $M^2$ Si.

Die Wertigkeiten x, y, und z der Metallatome und Halbmetallatome wie beispielsweise $M^1$ und $M^2$ sind dabei vorzugsweise so gewählt, dass die Metallatome und Halbmetallatome wie beispielsweise $M^1$ und $M^2$ jeweils unabhängig voneinander ausgewählt sind aus der Gruppe bestehend aus $Al^{3+}$, $Ti^{4+}$, $Zr^{4+}$, $Fe^{3+}$, $Fe^{4+}$, $B^{3+}$ und $Si^{4+}$, besonders bevorzugt aus der Gruppe bestehend aus $Al^{3+}$, $Ti^{4+}$, $Zr^{4+}$ und $Si^{4+}$, ganz besonders bevorzugt aus der Gruppe bestehend aus $Ti^{4+}$, $Zr^{4+}$ und $Si^{4+}$, insbesondere jeweils für $Si^{4+}$ stehen.

Dem Fachmann ist der Begriff eines "nicht hydrolysierbaren organischen Restes" bekannt. Jeder übliche dem Fachmann bekannte organische Rest, der nicht hydrolysierbar ist, kann als Bestandteil der wenigstens einen zur Herstellung der wässrigen Sol-Gel-Zusammensetzung (B) eingesetzten Ausgangverbindung, insbesondere der wenigstens einen Komponente (A1) und/oder (A2) dienen.

Unter einem "nicht hydrolysierbaren organischen Rest" wird, beispielsweise im Zusammenhang mit den Resten $R^1$, $R^2$ und $R^3$- jeweils unabhängig voneinander - vorzugsweise ein nicht hydrolysierbarer organischer Rest ausgewählt aus der Gruppe bestehend aus $C_1$-$C_{10}$-aliphatischen Resten, $C_1$-$C_{10}$-heteroaliphatischen Resten, $C_3$-$C_{10}$-cycloaliphatischen Resten, 3-10- gliedrigen heterocycloaliphatischen Resten, 5-12 gliedrigen Aryl- oder Heteroaryl-Resten, über einen $C_{1-6}$-aliphatischen Rest gebundene $C_3$-$C_{10}$-cycloaliphatische Reste, über einen $C_{1-6}$-aliphatischen Rest gebundene 3-10-gliedrige heterocycloaliphatische Reste, über einen $C_{1-6}$-aliphatischen Rest gebundene 5-12 gliedrige Aryl- oder Heteroaryl-Reste, verstanden, wobei jeder diese Reste gegebenenfalls wenigstens eine reaktive funktionelle Gruppe enthalten kann, sofern die Bindung des nicht hydrolysierbaren organischen Restes an das Metallatom oder Halbmetallatomen wie beispielsweise $M^1$ und/oder $M^2$, insbesondere wenn $M^1$ und/oder $M^2$ jeweils für Si stehen, unter dem Fachmann bekannten üblichen Reaktionsbedingungen nicht hydrolytisch gespalten werden kann.

Der Ausdruck "$C_1$-$C_{10}$-aliphatischer Rest" umfasst im Sinne dieser Erfindung vorzugsweise acyclische gesättigte oder ungesättigte, vorzugsweise gesättigte, aliphatische Kohlenwasserstoffreste, d.h. $C_{1-10}$-aliphatische Reste, die jeweils verzweigt oder unverzweigt sowie unsubstituiert oder ein- oder mehrfach substituiert sein können, mit 1 bis 10 Kohlenstoffatomen, d.h. $C_{1-10}$-Alkanyle, $C_{2-10}$-Alkenyle und $C_{2-10}$-Alkinyle. Dabei weisen Alkenyle mindestens eine C-C-Doppelbindung und Alkinyle mindestens eine C-C-Dreifachbindung auf. Bevorzugt ist ein $C_1$-$C_{10}$-aliphatischer Rest aus der Gruppe ausgewählt, die Methyl, Ethyl, n-Propyl, 2-Propyl, n-Butyl, iso-Butyl, sec.-Butyl, tert.-Butyl, n-Pentyl, iso-Pentyl, neo-Pentyl, n-Hexyl, n-Heptyl, n-Octyl, n-Nonyl, und n-Decyl, umfasst.

Der Ausdruck "$C_1$-$C_{10}$-heteroaliphatischer Rest" umfasst im Sinne dieser Erfindung vorzugsweise $C_1$-$C_{10}$-aliphatische Reste, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind.

Der Ausdruck "$C_{3-10}$-cyloaliphatischer Rest" umfasst im Sinne dieser Erfindung vorzugsweise cyclische aliphatische (cycloaliphatische) Kohlenwasserstoffe mit 3, 4, 5, 6, 7, 8, 9 oder 10 Kohlenstoffatomen, wobei die Kohlenwasserstoffe gesättigt oder ungesättigt (aber nicht aromatisch), unsubstituiert oder ein- oder mehrfach substituiert sein können. Die Bindung des $C_{3-10}$-cyloaliphatischen Restes an die jeweilige übergeordnete allgemeine Struktur kann über jedes beliebige und mögliche Ringglied des $C_{3-10}$-cyloaliphatischen Restes erfolgen, erfolgt jedoch vorzugsweise über ein Kohlenstoffatom. Die $C_{3-10}$-cyloaliphatischen Reste können weiterhin einfach oder mehrfach verbrückt sein wie bspw. im Fall von Adamantyl, Bicyclo[2.2.1]heptyl oder Bicyclo[2.2.2]octyl. Bevorzugt ist ein $C_{3-10}$-cyloaliphatischer Rest aus der Gruppe ausgewählt, die Cyclopropyl, Cyclobutyl, Cyclopentyl, Cyclohexyl, und Cycloheptyl umfasst.

Der Ausdruck "3-10- gliedriger heterocycloaliphatischer Rest" umfasst vorzugsweise aliphatische gesättigte oder ungesättigte (aber nicht aromatische) cycloaliphatische Reste mit drei bis zehn, d.h. 3, 4, 5, 6, 7, 8, 9 oder 10 Ringgliedern, in denen wenigstens ein, gegebenenfalls auch 2 oder 3 Kohlenstoffatome durch ein Heteroatom wie N, O oder S oder eine Heteroatomgruppe wie NH, N($C_{1-10}$-aliphatischer Rest) oder N($C_{1-10}$-aliphatischer Rest)$_2$ ersetzt ist/sind, wobei die Ringglieder unsubstituiert oder ein- oder mehrfach substituiert sein können. Die Bindung an die übergeordnete allgemeine Struktur kann über jedes beliebige und mögliche Ringglied des heterocycloaliphatischen Restes erfolgen, erfolgt jedoch vorzugsweise über ein Kohlenstoffatom. Bevorzugt sind 3-10- gliedrige heterocycloaliphatische Reste aus der Gruppe umfassend Azetidinyl, Aziridinyl, Azepanyl, Azocanyl, Diazepanyl, Dithiolanyl, Dihydrochinolinyl, Dihydropyrrolyl, Dioxanyl, Dioxolanyl, Dioxepanyl, Dihydroindenyl Dihydropyridinyl, Dihydrofuranyl, Dihydroisochinolinyl, Dihydroindolinyl, Dihydroisoindolyl, Imidazolidinyl, Isoxazolidinyl, Morpholinyl, Oxiranyl, Oxetanyl, Pyrrolidinyl, Piperazinyl, 4-Methylpiperazinyl, Piperidinyl, Pyrazolidinyl, Pyranyl, Tetrahydropyrrolyl, Tetrahydropyranyl, Tetrahydrochinolinyl, Tetrahydroisochinolinyl, Tetrahydroindolinyl, Tetrahydrofuranyl, Tetrahydropyridinyl, Tetrahydrothiophenyl, Tetrahydropyridoindolyl, Tetrahydronaphthyl, Tetrahydrocarbolinyl, Tetrahydroisoxazolopyridinyl, Thiazolidinyl und Thiomorpholinyl.

Der Begriff "Aryl" bedeutet im Sinne dieser Erfindung aromatische Kohlenwasserstoffe mit 6 bis 12 Ringgliedern, vorzugsweise 6 Ringgliedern, u.a. Phenyle und Naphthyle. Jeder Aryl-Rest kann unsubstituiert oder einfach oder mehrfach substituiert vorliegen, wobei die Aryl-Substituenten gleich oder verschieden und in jeder beliebigen und möglichen Position des Aryls sein können. Die Bindung des Aryls an die übergeordnete allgemeine Struktur kann über jedes beliebige und mögliche Ringglied des Aryl-Restes erfolgen. Bevorzugt ist Aryl aus der Gruppe ausgewählt, die Phenyl, 1-Naphthyl und 2-Naphthyl enthält.

Der Begriff "Heteroaryl" steht für einen 5- bis 12-gliedrigen, vorzugsweise 5- oder 6-gliedrigen cyclischen aromatischen Rest, der mindestens 1, ggf. auch 2, 3, 4 oder 5 Heteroatome, enthält, wobei die Heteroatome jeweils unabhängig voneinander ausgewählt sind aus der Gruppe S, N und O und der Heteroaryl-Rest unsubstituiert oder ein- oder mehrfach substituiert sein kann; im Falle der Substitution am Heteroaryl können die Substituenten gleich oder verschieden sein und in jeder beliebigen und möglichen Position des Heteroaryls sein. Die Bindung an die übergeordnete allgemeine Struktur kann über jedes beliebige und mögliche Ringglied des Heteroaryl-Restes erfolgen. Es ist bevorzugt, dass der Heteroaryl-Rest ausgewählt ist aus der Gruppe, die Benzofuranyl, Benzoimidazolyl, Benzothienyl, Benzothiadiazolyl, Benzothiazolyl, Benzotriazolyl, Benzooxazolyl, Benzooxadiazolyl, Chinazolinyl, Chinoxalinyl, Carbazolyl, Chinolinyl, Dibenzofuranyl, Dibenzothienyl, Furyl (Furanyl), Imidazolyl, Imidazothiazolyl, Indazolyl, Indolizinyl, Indolyl, Isochinolinyl, Isoxazoyl, Isothiazolyl, Indolyl, Naphthyridinyl, Oxazolyl, Oxadiazolyl, Phenazinyl, Phenothiazinyl, Phtalazinyl, Pyrazolyl, Pyridyl (2-Pyridyl, 3-Pyridyl, 4-Pyridyl), Pyrrolyl, Pyridazinyl, Pyrimidinyl, Pyrazinyl, Purinyl, Phenazinyl, Thienyl (Thiophenyl), Triazolyl, Tetrazolyl, Thiazolyl, Thiadiazolyl oder Triazinyl umfasst.

Der Ausdruck "über einen $C_{1-6}$-aliphatischen Rest gebundener $C_3$-$C_{10}$-cycloaliphatischer Rest, 3-10- gliedriger heterocycloaliphatischer Rest, 5-12 gliedriger Aryl- oder Heteroaryl-Rest" bedeutet vorzugsweise, dass die genannten Reste die oben definierten Bedeutungen haben und jeweils über einen $C_{1-6}$-aliphatischen Rest an die jeweilige übergeordnete allgemeine Struktur gebunden ist., der verzweigt oder unverzweigt, gesättigt oder ungesättigt unsubstituiert oder einfach oder mehrfach substituiert sein kann.

Wenn ein Rest oder eine Gruppe wie beispielsweise die Gruppe $X^1$ innerhalb der Verbindung (A1) oder ein nicht hydrolysierbarer organischer Rest wie die Reste $R^2$ und $R^3$ innerhalb der Verbindung (A2) mehrfach innerhalb eines Moleküls vorkommt, dann kann dieser Rest oder diese Gruppe jeweils gleiche oder unterschiedliche Bedeutungen haben: steht beispielsweise die Gruppe für $X^1$ für O-$R^a$, wobei $R^a$ für einen $C_{1-6}$-aliphatischen Rest steht, und kommt beispielsweise innerhalb des Moleküls $(M^1)^x(X^1)_a(R^1)$ insgesamt dreimal vor, so kann $X^1$ zum Beispiel dreimal jeweils für O-$C_2H_5$ stehen oder kann einmal für O-$C_2H_5$, einmal für O-$CH_3$ und einmal für O-$C_3H_6$ stehen. Stehen $R^2$ und $R^3$ innerhalb von (A2) jeweils für einen nicht hydrolysierbaren organischen Rest, so kann einer dieser Reste beispielsweise wenigstens eine reaktive funktionelle Gruppe aufweisen und der verbleibende Rest keine reaktive funktionelle Gruppe aufweisen.

Die Reste T, U, V und W stehen jeweils unabhängig voneinander für einen Rest, der 1 bis 30 Kohlenstoffatome aufweist und gegebenenfalls bis zu 10 Heteroatome und Heteroatomgruppen ausgewählt aus der Gruppe bestehend aus O, S und N aufweisen kann. Die Reste T, U, V und W können dabei aliphatisch, heteroaliphatisch, cycloaliphatisch, heterocycloaliphatisch, aromatisch oder heteroaromatisch sein, wobei auch teil(hetero)aromatische Reste möglich sind, d.h. (hetero)aromatisch Reste, die mit wenigstens einer aliphatisch, heteroaliphatischen, cycloaliphatischen, und/oder heterocycloaliphatischen Gruppe substituiert sind. Dem Fachmann ist klar, dass die Reste T, U, V und W bivalent oder trivalent sind und als verbrückende organische Gruppen zwischen zwei oder drei Metall- und/oder Halbmetallatomen fungieren. Steht beispielsweise $R^1$ für $(U)[(M^1)^x(X^1)_c]_2$ so ist U eine trivalente Gruppe, die einen Rest $(M^1r(X^1)_a$ mit zwei Resten $[(M^1)^x(X^1)_c]$ verbrückt.

Vorzugsweise haben alle Gruppen $X^1$ innerhalb der als Komponente (A1) eingesetzten Verbindung $(M^1)^x(X^1)_a(R^1)$ die gleiche Bedeutung, besonders bevorzugt stehen alle Gruppen $X^1$ innerhalb der als Komponente (A1) eingesetzten Verbindung $(M^1)^x(X^1)_a(R^1)$ für O-$R^a$, wobei $R^a$ vorzugsweise für einen $C_{1-6}$-aliphatischen Rest, insbesondere einen $C_{1-6}$-Alkyl-Rest, am meisten bevorzugt, worin $R^a$ für Methyl, Ethyl, n-Propyl, iso-Propyl, n-Butyl, iso-Butyl, oder tert-Butyl steht.

Vorzugsweise haben alle Gruppen $X^2$ innerhalb der als Komponente (A2) eingesetzten Verbindung die gleiche Bedeutung, besonders bevorzugt stehen alle Gruppen $X^2$ innerhalb der als Komponente (A2) eingesetzten Verbindung für O-$R^a$, wobei $R^a$ für einen $C_{1-6}$-aliphatischen Rest, insbesondere einen $C_{1-6}$-Alkyl-Rest, am meisten bevorzugt, worin $R^3$ für Methyl, Ethyl, n-Propyl, iso-Propyl, n-Butyl, iso-Butyl, oder tert-Butyl steht.

Vorzugsweise sind

$M^1$ und $M^2$ jeweils unabhängig voneinander ausgewählt sind aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt bedeuten $M^1$ und $M^2$ jeweils Si,

oder $M^1$ ist ausgewählt aus der Gruppe bestehend aus Al, Ti, Zr, Fe, B und Si, besonders bevorzugt ausgewählt aus der Gruppe bestehend aus Al, Ti, Zr und Si, ganz besonders bevorzugt ausgewählt aus der Gruppe bestehend aus Ti, Zr und Si, insbesondere bevorzugt ausgewählt aus der Gruppe bestehend aus Zr und Si, am meisten bevorzugt Si, und $M^2$ steht für Si,

$X^1$ und $X^2$ stehen jeweils unabhängig voneinander für eine Alkoxy-Gruppe O-$R^a$, wobei $R^a$ jeweils für einen $C_{1-6}$-aliphatischen Rest, vorzugsweise für einen $C_{1-6}$-Alkyl-Rest, besonders bevorzugt, worin $R^3$ für Methyl, Ethyl, n-Propyl, iso-Propyl, n-Butyl, iso-Butyl, oder tert-Butyl steht.

Besonders bevorzugt ist die zur Herstellung der erfindungsgemäßen wässrigen Beschichtungszusammensetzung eingesetzte wässrige Sol-Gel-Zusammensetzung (B) erhältlich durch Umsetzung
wenigstens einer Verbindung (A1) als wenigstens eine Ausgangsverbindung, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist,

insbesondere wenigstens einer Verbindung (A1) als wenigstens eine Ausgangsverbindung, in der $R^1$ für einen nicht hydrolysierbaren organischen Rest steht, welcher wenigstens Epoxid-Gruppe als eine reaktive funktionelle Gruppe, aufweist, und zudem

insbesondere wenigstens einer weiteren Verbindung (A1) als wenigstens eine Ausgangsverbindung, in der $R^1$ für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, aufweist,

und gegebenenfalls wenigstens einer weiteren Verbindung (A1), in der $R^1$ für $X^1$ steht,
und gegebenenfalls wenigstens einer weiteren Verbindung (A1), in der $R^1$ für einen nicht hydrolysierbaren organischen Rest steht, welcher keine reaktive funktionelle Gruppe aufweist,
und gegebenenfalls wenigstens einer Verbindung (A2).

Vorzugsweise ist die zur Herstellung der erfindungsgemäßen wässrigen Beschichtungszusammensetzung eingesetzte wässrige Sol-Gel-Zusammensetzung (B) erhältlich durch Umsetzung

wenigstens einer Verbindung $Si(X^1)_3(R^1)$ als wenigstens eine Verbindung (A1-1),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

insbesondere wenigstens einer Verbindung $Si(X^1)_3(R^1)$ als wenigstens eine Verbindung (A1-1a),

wobei $R^1$ darin für einen nicht hydrolysierbaren organischen Rest steht, welcher wenigstens eine Epoxid-Gruppe als eine reaktive funktionelle Gruppe, aufweist, und zudem

insbesondere wenigstens einer weiteren Verbindung $Si(X^1)_3(R^1)$ als wenigstens eine weitere Verbindung (A1-1b),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen und sekundären Amino-Gruppen, aufweist,

und gegebenenfalls wenigstens einer Verbindung $Si(X^1)_4$ als wenigstens eine weitere Verbindung (A1-2),

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist.

und gegebenenfalls wenigstens einer Verbindung $Zr(X^1)_4$ als wenigstens eine weitere Verbindung (A1-4),

mit Wasser.

In einer besonders bevorzugten Ausführungsform ist die zur Herstellung der erfindungsgemäßen wässrigen Beschichtungszusammensetzung eingesetzte wässrige Sol-Gel-Zusammensetzung (B) erhältlich durch Umsetzung

wenigstens einer Verbindung $Si(X^1)_3(R^1)$ als wenigstens eine Verbindung (A1-1a),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, insbesondere wenigstens eine Epoxid-Gruppe, aufweist,

und wobei der nicht hydrolysierbare organische Rest vorzugsweise ausgewählt ist aus der Gruppe bestehend

16

aus $C_1$-$C_{10}$-aliphatischen Resten und $C_1$-$C_{10}$-heteroaliphatischen Resten, besonders bevorzugt ausgewählt ist aus $C_1$-$C_{10}$-aliphatischen Resten,

$X^1$ für $OR^a$ steht und $R^a$ für einen $C_{1-6}$-Alkyl-Rest steht,

wenigstens einer weiteren Verbindung $Si(X^1)_3(R^1)$ als wenigstens eine weitere Verbindung (A1-1b),

wobei $R^1$ darin für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, insbesondere wenigstens eine primäre Amino-Gruppe oder eine sekundäre Amino-Gruppe, aufweist,

und wobei der nicht hydrolysierbare organische Rest vorzugsweise ausgewählt ist aus der Gruppe bestehend aus $C_1$-$C_{10}$-aliphatischen Resten und $C_1$-$C_{10}$-heteroaliphatischen Resten, besonders bevorzugt ausgewählt ist aus $C_1$-$C_{10}$-aliphatischen Resten,

$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2), worin $X^1$ für $OR^a$ steht und $R^a$ für einen $C_{1-6}$-Alkyl-Rest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen Rest steht, welcher keine reaktive funktionelle Gruppe aufweist,

und wobei der nicht hydrolysierbare organische Rest vorzugsweise ausgewählt ist aus der Gruppe bestehend aus $C_1$-$C_{10}$-aliphatischen Resten, $C_1$-$C_{10}$-heteroaliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-Alkyl-Rest steht,

mit Wasser.

Besonders bevorzugt ist die zur Herstellung der erfindungsgemäßen wässrigen Beschichtungszusammensetzung eingesetzte wässrige Sol-Gel-Zusammensetzung (B) erhältlich durch Umsetzung

wenigstens einer Verbindung $Si(X^1)_3(R^1)$ als wenigstens eine Verbindung (A1-1a),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

$X^1$ für $OR^a$ steht und $R^a$ für einen $C_{1-6}$-Alkyl-Rest steht,

wenigstens einer weiteren Verbindung $Si(X^1)_3(R^1)$ als wenigstens eine weitere Verbindung (A1-1b),

wobei $R^1$ darin für einen nicht hydrolysierbaren $C_1$-$C_{10}$-aliphatischen organischen Rest steht, welcher wenigstens eine primäre Amino-Gruppe als reaktive funktionelle Gruppe aufweist,
$X^1$ für $OR^a$ steht und $R^a$ für einen $C_{1-6}$-Alkyl-Rest steht,

und gegebenenfalls wenigstens einer Verbindung $Si(X^1)_4$ als wenigstens eine weitere Verbindung (A1-2),

worin $X^1$ für $OR^a$ steht und $R^a$ für einen $C_{1-6}$-Alkyl-Rest steht,

und gegebenenfalls wenigstens einer Verbindung $Si(X^1)_3(R^1)$ als wenigstens eine weitere Verbindung (A1-3),

wobei $R^1$ darin für einen nicht hydrolysierbaren organischen $C_1$-$C_{10}$-aliphatischen Rest steht, welcher keine reaktive funktionelle Gruppe aufweist,

und worin der nicht hydrolysierbare organische Rest $R^1$ vorzugsweise ausgewählt ist aus der Gruppe bestehend aus $C_1$-$C_{10}$-aliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten,

und $X^1$ für $OR^a$ steht und $R^a$ für einen $C_{1-6}$-Alkyl-Rest steht,

und gegebenenfalls wenigstens einer Verbindung $Zr(X^1)_4$ als wenigstens eine weitere Verbindung (A1-4), worin $X^1$ für $OR^a$ steht und $R^a$ für einen $C_{1-6}$-Alkyl-Rest steht,

mit Wasser.

Insbesondere bevorzugt ist die zur Herstellung der erfindungsgemäßen wässrigen Beschichtungszusammensetzung eingesetzte wässrige Sol-Gel-Zusammensetzung (B) erhältlich durch Umsetzung

wenigstens einer Verbindung $Si(X^1)_3(R^1)$ als wenigstens eine Verbindung (A1-1a),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

$X^1$ für $OR^a$ steht und $R^a$ für einen $C_{1-6}$-Alkyl-Rest steht,

wenigstens einer weiteren Verbindung $Si(X^1)_3(R^1)$ als wenigstens eine weitere Verbindung (A1-1b),

wobei $R^1$ darin für einen nicht hydrolysierbaren $C_1$-$C_{10}$-aliphatischen organischen Rest steht, welcher wenigstens eine primäre Amino-Gruppe als reaktive funktionelle Gruppe aufweist,

$X^1$ für $OR^a$ steht und $R^a$ für einen $C_{1-6}$-Alkyl-Rest steht,

und wenigstens einer Verbindung $Si(X^1)_4$ als wenigstens eine Verbindung (A1-2),

worin $X^1$ für $OR^a$ steht und $R^a$ für einen $C_{1-6}$-Alkyl-Rest steht,

und wenigstens einer Verbindung $Si(X^1)_3(R^1)$ als wenigstens eine weitere Verbindung (A1-3),

wobei $R^1$ darin für einen nicht hydrolysierbaren organischen $C_1$-$C_{10}$-aliphatischen Rest steht, welcher keine reaktive funktionelle Gruppe aufweist,

und worin der nicht hydrolysierbare organische Rest $R^1$ vorzugsweise ausgewählt ist aus der Gruppe bestehend aus $C_1$-$C_{10}$-aliphatischen Resten, 5-12 gliedrigen Aryl- oder Heteroaryl-Resten, und über einen $C_{1-6}$-aliphatischen Rest gebundenen 5-12 gliedrigen Aryl- oder Heteroaryl-Resten, besonders bevorzugt ausgewählt ist aus $C_1$-$C_{10}$-aliphatischen Resten,

und $X^1$ für $OR^a$ steht und $R^a$ für einen $C_{1-6}$-Alkyl-Rest steht,

mit Wasser.

Werden zur Herstellung der erfindungsgemäß eingesetzten wässrigen Sol-Gel-Zusammensetzung (B) wenigstens zwei Ausgangsverbindungen eingesetzt wie beispielsweise zwei voneinander verschiedene Verbindungen (A1) wie (A1-1a) und (A1-1b) bezeichnet, so liegt das relative Gewichtsverhältnis dieser beiden Komponenten wie beispielsweise (A1-1a) und (A1-1b) zueinander vorzugsweise in einem Bereich von 10:1 bis 1:10, besonders bevorzugt in einem Bereich von 7,5:1 bis 1:7,5, ganz besonders bevorzugt in einem Bereich von 5:1 bis 1:5, insbesondere in einem Bereich von 2:1 bis 1:2.

Werden zur Herstellung der erfindungsgemäß eingesetzten wässrigen Sol-Gel-Zusammensetzung wenigstens drei Ausgangsverbindungen eingesetzt wie beispielsweise drei voneinander verschiedene Verbindungen (A1) wie (A1-1a), (A1-1b) und (A1-2), so liegt das relative Gewichtsverhältnis der Komponenten (A1-1a), (A1-1b) und (A1-2) zueinander vorzugsweise in einem Bereich von 5:1:1 bis 1:1:5 oder in einem Bereich von 5:1:1 bis 1:5:1 oder in einem Bereich von 1:5:1 bis 5:1:1 oder in einem Bereich von 1:5:1 bis 1:1:5 oder in einem Bereich von 1:1:5 bis 5:1:1 oder in einem Bereich von 1:1:5 bis 1:5:1, besonders bevorzugt in einem Bereich von 2:1:1 bis 1:1:2 oder in einem Bereich von 2:1:1 bis 1:2:1 oder in einem Bereich von 1:2:1 bis 2:1:1 oder in einem Bereich von 1:2:1 bis 1:1:2 oder in einem Bereich von 1:1:2 bis 2:1:1 oder in einem Bereich von 1:1:2 bis 1:2:1.

Werden zur Herstellung der erfindungsgemäß eingesetzten wässrigen Sol-Gel-Zusammensetzung wenigstens vier Ausgangsverbindungen eingesetzt wie beispielsweise vier voneinander verschiedene Verbindungen (A1), beispielsweise die vorstehend als (A1-1a), (A1-1b), (A1-2) und (A1-3) bezeichneten Verbindungen, so liegt das relative Gewichtsverhältnis der Komponenten (A1-1a), (A1-1b), (A1-2) und (A1-3) zueinander vorzugsweise in einem Bereich von 5:1:1:1 bis 1:1:1:5 oder von 5:1:1:1 bis 1:1:5:1 oder von 5:1:1:1 bis 1:5:1:1 oder von 1:5:1:1 bis 5:1:1:1 oder von 1:5:1:1 bis 1:1:5:1 oder von 1:5:1:1 bis 1:1:1:5 oder von 1:1:5:1 bis 5:1:1:1 oder von 1:1:5:1 bis 1:5:1:1 oder von 1:1:5:1 bis 1:1:1:5 oder von 1:1:1:5 bis 5:1:1:1 oder von 1:1:1:5 bis 1:5:1:1 oder von 1:1:1:5 bis 1:1:5:1, besonders bevorzugt in einem Bereich von 2:1:1:1 bis 1:1:1:2 oder von 2:1:1:1 bis 1:1:2:1 oder von 21:1:1 bis 1:2:1:1 oder von 1:2:1:1 bis 2:1:1:1 oder von 1:2:1:1 bis 1:1:2:1 oder von 1:2:1:1 bis 1:1:1:2 oder von 1:1:2:1 bis 2:1:1:1 oder von 1:1:2:1 bis 1:2:1:1 oder von 1:1:2:1 bis 1:1:1:2 oder von 1:1:1:2 bis 2:1:1:1 oder von 1:1:1:2 bis 1:2:1:1 oder von 1:1:1:2 bis 1:1:5:1.

In einer ganz besonders bevorzugten Ausführungsform liegt das relative Gewichtsverhältnis der Komponenten (A1-1a), (A1-1b), (A1-2) und (A1-3) zueinander in einem Bereich von 2,2:0,5:1,2:1,2 bis 2:0,5:1:1.

Zur Herstellung der wässrigen Sol-Gel-Zusammensetzung (B) eignet sich beispielsweise wenigstens eine Verbindung $(M^1)^x(X^1)_a(R^1)$ als Komponente (A1), in der $R^1$ die Bedeutung $X^1$ hat. Beispiele entsprechender Verbindungen sind Tetramethoxysilan (TMOS), Tetraethoxysilan (TEOS), Dimethoxydiethoxysilan, Tetrapropoxysilan, Tetraisopropoxysilan, Tetrabutoxysilan, Titantetraisopropoxid, Titantetrabutoxid, Zirkoniumtetraisopropoxid und Zirkoniumtetrabutoxid.

Zur Herstellung der wässrigen Sol-Gel-Zusammensetzung (B) eignet sich beispielsweise wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ gegebenenfalls wenigstens eine reaktive funktionelle Gruppe aufweisen kann.

Weist der nicht hydrolysierbare organische Rest $R^1$ dabei wenigstens eine Gruppe auf, die eine Vinyl-Gruppe als ethylenisch ungesättigte Doppelbindung enthält, so eignen sich beispielsweise Vinyltrimethoxysilan (VTMS), Vinyltriethoxysilan, Vinyltriisopropoxysilan, Vinyltrichlorsilan, Vinyl-tris(2-methoxy-ethoxy)silan, Vinyltriacetoxysilan, p-Styryltrimethoxysilan, und/oder p-Styryltriethoxysilan als Komponente (A1).

Weist der nicht hydrolysierbare organische Rest $R^1$ dabei wenigstens eine Gruppe auf, die eine (Meth)acryl-Gruppe als ethylenisch ungesättigte Doppelbindung enthält, so eignen sich beispielsweise γ-(Meth)acryloxypropyltrimethoxysilan (MAPTS), γ-(Meth)acryloxypropyltriethoxysilan, γ-(Meth)acryloxypropyltriisopropoxysilan, β-(Meth)acryloxyethyltrimethoxysilan, β-(Meth)acryloxyethyltriethoxysilan, β-(Meth)acryloxyethyltriisopropoxysilan, 3-(Meth)acryloxypropyltriacetoxysilan, (Meth)acrylamidopropyltriethoxysilan, (Meth)acrylamidopropyltrimethoxysilan, (Meth)acrylamidopropyldimethoxyethoxysilan und/oder (Meth)acrylamidopropylmethoxydiethoxysilan als Komponente (A1).

Weist der nicht hydrolysierbare organische Rest $R^1$ dabei wenigstens eine Gruppe auf, die eine Isocyanat-Gruppe enthält, so eignen sich beispielsweise γ-Isocyanatopropyltriethoxysilan und/oder γ-Isocyanatopropyltrimethoxysilan als Komponente (A1).

Weist der nicht hydrolysierbare organische Rest $R^1$ dabei wenigstens eine Gruppe auf, die wenigstens eine primäre und/oder sekundäre Amino-Gruppe enthält, so eignen sich beispielsweise 3-Aminopropyltrimethoxysilan (APS), 3-Aminopropyltriethoxysilan, 3-Aminopropyltriisopropoxysilan, 2-Aminoethyltrimethoxysilan, 2-Aminoethyltriethoxysilan, 2-Aminoethyltriisopropoxysilan, Aminomethyltrimethoxysilan, Aminomethyltriethoxysilan, Aminomethyltriisopropoxysilan, 3-(2-Aminoethyl)aminopropyltrimethoxysilan (AEAPS), 3-(2-Aminoethyl)aminopropyltriethoxysilan, 3-(2-Aminoethyl)aminopropyltriisopropoxysilan, 2-(2-Aminoethyl)aminoethyltrimethoxysilan, 2-(2-Aminoethyl)aminoethyltriethoxysilan 2-(2-Aminoethyl)aminoethyltriisopropoxysilan, 3-(3-Aminopropyl)aminopropyltrimethoxysilan, 3-(3-Aminopropyl)aminopropyltriethoxysilan, 3-(3-Aminopropyl)aminopropyltriisopropoxysilan, Diethylentriaminopropyltrimethoxysilan, Diethylentriaminopropyltriethoxysilan, N-(n-Butyl)-3-aminopropyltrimethoxysilan, N-(n-Butyl)-3-aminopropyltriethoxysilan, N-Cylohexylaminomethyltriethoxysilan, N-Cylohexylaminomethyltrimethoxysilan,N-Ethyl-γ-aminoisobutyltrimethoxysilan, N-Ethyl-γ-aminoisobutyltriethoxysilan, N-(Vinylbenzyl)-2-aminoethyl-3-aminopropyltrimethoxysilan-Hydrochlorid, N-Phenyl-γ-aminopropyltrimethoxysilan, N-Phenyl-γ-aminopropyltriethoxysilan, γ-Ureidopropyltrimethoxysilan, γ-Ureidopropyltriethoxysilan, N-Methyl-[3-(trimethoxysilyl)propyl]carbamat, und/oder N-Trimethoxysilylmethyl-O-methylcarbamat als Komponente (A1).

Weist der nicht hydrolysierbare organische Rest $R^1$ dabei wenigstens eine Gruppe auf, die wenigstens eine Epoxid-Gruppe enthält, so eignen sich beispielsweise 3-Glycidoxypropyltrimethoxysilan (GPTMS), 3-Glycidoxypropyltriethoxysilan, 3-Glycidoxypropyltriisopropoxyoxysilan, 2-Glycidoxyethyltrimethoxysilan, 2-Glycidoxyethyltriethoxysilan, 2-Glycidoxyethyltriisopropoxyoxysilan, β-(3,4-Epoxycyclohexyl)-ethyltrimethoxysilan, und/oder β-(3,4-Epoxycyclohexyl)-ethyltriethoxysilan als Komponente (A1).

Weist der nicht hydrolysierbare organische Rest $R^1$ dabei wenigstens eine Gruppe auf, die wenigstens eine Thiol-Gruppe enthält, so eignen sich beispielsweise 3-Mercaptopropyltrimethoxysilan (MPTMS), 3-Mercaptopropyltriethoxysilan, 3-Mercaptopropyltriisopropoxysilan, 2-Mercaptoethyltrimethoxysilan, 2-Mercaptoethyltriethoxysilan und/oder 2-Mercaptoethyltriisopropoxysilan als Komponente (A1).

Weist der nicht hydrolysierbare organische Rest $R^1$ dabei wenigstens eine Gruppe auf, die phosphorhaltig ist, so eignen sich beispielsweise Dimethylphosphonatoethyltrimethoxysilan, Dimethylphosphonatoethyltriethoxysilan (PHS), Dimethylphosphonatoethyltriisopropoxysilan, Diethylphosphonatoethyltrimethoxysilan, Diethylphosphonatoethyltriethoxysilan (PHS und/oder Diethylphosphonatoethyltriisopropoxysilan als Komponente (A1).

Zur Herstellung der wässrigen Sol-Gel-Zusammensetzung (B) eignet sich zudem wenigstens eine Verbindung $(M^1)^x(X^1)_a(R^1)$ als Komponente (A1), in der $R^1$ für einen nicht hydrolysierbaren organischen Rest steht, wobei der nicht hydrolysierbare organische Rest $R^1$ keine reaktive funktionelle Gruppe aufweisen kann.

Weist der nicht hydrolysierbare organische Rest $R^1$ dabei keine reaktive funktionelle Gruppe auf, so eignen sich beispielsweise Methyltrimethoxysilan (MTMS), Methyltriethoxysilan (MTES), Methyltripropopxysilan, Methyltriisopropoxysilan, Ethyltrimethoxysilan, Ethyltriethoxysilan, Ethyltripropopxysilan, Ethyltriisopropoxysilan, Octyltrimethoxysilan, Isobutyltriethoxysilan, Isobutyltrimethoxysilan, Octyltriethoxysilan, Hexyltrimethoxysilan, Hexyltriethoxysilan, Decyltrimethoxysilan, Decyltriethoxysilan, Hexaecyltrimethoxysilan, Hexadecyltriethoxysilan, Isooctyltrimethoxysilan, Isooctyltriethoxysilan, Phenyltrimethoxysilan (PHS), Phenyltriethoxysilan, Phenyltripropoxysilan, Phenyltriisopropoxysilan, Benzyltrimethoxysilan, Benzyltriethoxysilan, Benzyltripropoxysilan, Benzyltriisopropoxysilan, Octyltrichlorsilan, Tridecafluorooctyltriethoxysilan, Tridecafluorooctyltrimethoxysilan, 3-Octanoylthio-1-propyltriethoxysilan, 3-Octanoylthio-1-propyltrimethoxysilan, 3-Triethoxysily-N-(1,3-Dimethylbutylidenpropylamin, 3-Chlorpropyltrimethoxysilan und/oder 3-Chlorpropyltriethoxysilan als Komponente (A1).

Zur Herstellung der wässrigen Sol-Gel-Zusammensetzung (B) eignet sich beispielsweise wenigstens eine Verbindung $(M^1)^x(X^1)_a(R^1)$ als Komponente (A1), in der $R^1$ für $(T)(M^1)^x(X^1)_c$ steht. Beispielsweise eignen sich hier Bis(trimethoxysilyl)ethan, Bis(triethoxysilyl)ethan, Bis-[γ-(triethoxysilyl)propyl]amin, Bis-[γ-(trimethoxysilyl)propyl]amin, Bis(triethoxysilyl-propyl)tetrasulfid und/oder Bis(trimethoxysilylpropyl)tetrasulfid,

Zur Herstellung der wässrigen Sol-Gel-Zusammensetzung (B) eignet sich beispielsweise wenigstens eine Verbindung $(M^1)^x(X^1)_a(R^1)$ als Komponente (A1), in der $R^1$ für $(U)[(M^1)^x(X^1)_c]_2$ steht. Beispielsweise eignet sich hier Tris-[3-(trimethoxysilyl)propyl]isocyanurat.

Zur Herstellung der wässrigen Sol-Gel-Zusammensetzung (B) eignet sich beispielsweise wenigstens eine Verbindung $(M^2)^y(X^2)_b(R^2)(R^3)$ als Komponente (A2), in der $R^2$ und $R^3$ unabhängig voneinander jeweils für einen nicht hydrolysierbaren organischen Rest stehen. Beispielsweise eignet sich hier 3-Glycidoxypropylmethyldiethoxysilan, 3-Glycidoxypropylmethyldimethoxysilan, γ-(Meth)acryloxypropylmethyldimethoxysilan, 3-Mercaptopropylmethyldimethoxysilan, 3-Mercaptopropylmethyldiethoxysilan, γ-(Meth)acryloxypropylmethyldiethoxysilan, N-(2-aminoethyl)-3-aminopropylmethyl-dimethoxysilan, N-(2-aminoethyl)-3-aminopropylmethyldiethoxysilan, 3-Amino-propylmethyldiethoxysilan, 3-Aminopropylmethyldimethoxysilan, Dimethyldimethoxysilan, Dimethyldiethoxysilan, Di-tert.-butoxydiacetoxysilan, Vinyldimethoxymethylsilan, Vinyldiethoxymethylsilan, N-Cyclohexylam ino-methyl methyld iethoxysilan, N-Cyclohexylaminomethylmethyldimethoxysilan, (Cyclohexyl)methyldimethoxysilan, Dicyclopentyldimethoxysilan und/oder N-Dimethoxy(methyl)silylmethyl-O-methylcarbamat.

In einer bevorzugten Ausführungsform liegt der Festkörpergehalt der zur Herstellung der erfindungsgemäßen Beschichtungszusammensetzung eingesetzten wässrigen Sol-Gel-Zusammensetzung (B) nach Hydrolyse und Kondensation der wenigstens einen Ausgangsverbindung in einem Bereich von 0,4 bis zu 40 Gew.-%, besonders bevorzugt in einem Bereich von 0,8 bis zu 35 Gew.-%, ganz besonders bevorzugt in einem Bereich von 1,2 bis zu 30 Gew.-%, insbesondere in einem Bereich von 1,6 bis 25 Gew.-% oder in einem Bereich von 2,0 bis 20 Gew.-% oder in einem Bereich von 2,4 bis 15 Gew.-% oder in einem Bereich von 2,8 bis 10 Gew.-% oder in einem Bereich von 3,0 bis zu 7,0 Gew.-%, jeweils bezogen auf das Gesamtgewicht der wässrigen Sol-Gel Zusammensetzung (B).

Der Festkörpergehalt der erfindungsgemäß eingesetzten wässrigen Sol-Gel-Zusammensetzung (B), insbesondere der erfindungsgemäß eingesetzten wässrigen Sol-Gel-Zusammensetzung (B), die ausschließlich aus wenigstens einer zur Herstellung der erfindungsgemäß eingesetzten wässrigen Sol-Gel-Zusammensetzung (B) geeigneten Ausgangsverbindung hergestellt worden ist, kann dabei aus der Menge der zur Herstellung der Sol-Gel-Zusammensetzung (B) eingesetzten wenigstens einen Ausgangsverbindung mittels Berechnung bestimmt werden. Dabei wird eine Hydrolyse der in der wenigstens einen Ausgangsverbindung enthaltenen hydrolysierbaren Gruppen wie beispielsweise der hydrolysierbaren Gruppen $X^1$ und zudem eine Kondensation sämtlicher durch eine solche Hydrolyse gebildeter Metall-OH und/oder Halbmetall-OH-Bindungen wie beispielsweise $M^1$-OH Bindungen angenommen. Zur Berechnung des Festkörpergehalts der erfindungsgemäß eingesetzten wässrigen Sol-Gel-Zusammensetzung werden dabei alle gegebenenfalls vorhandenen Einfachbindungen, die zwischen einer nicht hydrolysierbaren Gruppe wie einem nicht hydrolysierbaren organischen Rest wie $R^1$, und einem Metallatom oder Halbmetallatom wie $M^1$ ausgebildet sind, als zum Festkörpergehalt dazugehörend betrachtet und entsprechend mitgezählt. Vorzugsweise wird der Festkörpergehalt der erfindungsgemäß eingesetzten wässrigen Sol-Gel-Zusammensetzung (B) mittels dieser Berechnungsmethode bestimmt, d.h. bei dem im Zusammenhang mit der erfindungsgemäß eingesetzten wässrigen Sol-Gel-Zusammensetzung (B) angegebenen Festkörpergehalt handelt es sich vorzugsweise um den theoretisch berechneten Festkörpergehalt dieser Zusammensetzung. Der theoretisch berechnete Festkörpergehalt lässt sich dabei für jede der wenigstens einen Ausgangsverbindung, die zur Herstellung der erfindungsgemäß eingesetzten wässrigen Sol-Gel-Zusammensetzung (B) eingesetzt worden ist, nach der allgemeinen Formel

$$FK_{theo} = \frac{M_{kond}}{M_{start}} \cdot Anteil_{Rezept}$$

berechnen, worin

FKt$_{heo}$ = theoretisch berechneter Festkörpergehalt in Gew.-%
$M_{kond}$ = molare Masse der vollständig kondensierten Ausgangsverbindung in g/mol
$M_{start}$ = molare Masse der Ausgangsverbindung in g/mol und
Anteil$_{Rezept}$ = Anteil der Ausgangsverbindung in der Zusammensetzung in Gew.-%.

Der theoretisch berechnete Gesamtfestkörpergehalt ergibt sich dann aus der Summe der theoretisch berechneten Festkörpergehalte jeder eingesetzten Ausgangsverbindung. Eine Beispielberechnung zur Bestimmung des theoretisch berechneten Festkörpergehalts einer erfindungsgemäß eingesetzten wässrigen Sol-Gel-Zusammensetzung (B) findet sich im experimentellen Teil (Beispiele und Vergleichsbeispiele) unter Punkt 1. Enthält die erfindungsgemäß eingesetzte wässrige Sol-Gel-Zusammensetzung (B) zudem wenigstens ein weiteres Additiv, so muss der Festkörperanteil dieses Additivs gegebenenfalls zu dem aus der zur Herstellung von (B) eingesetzten wenigstens einen Ausgangsverbindung theoretisch berechneten Gesamtfestkörpergehalt addiert werden.

Der so theoretisch berechnete Festkörpergehalt ist in Einklang mit einem nach einer experimentellen Bestimmungsmethode ermittelten Festkörpergehhalt, solange die entsprechende erfindungsgemäß eingesetzte wässrige Sol-Gel-Zusammensetzung (B) kein weiteres Additiv enthält, welches einen eigenen Festkörperanteil aufweist bzw. mit sich bringt. Diese experimentelle Bestimmungsmethode sieht vor, dass die erfindungsgemäß eingesetzte wässrigen Sol-Gel-Zusammensetzung (B) über eine Dauer von 60 Minuten bei einer Temperatur von 130°C gemäß DIN EN ISO 3251 eingetrocknet wird. Dabei wird die hergestellte erfindungsgemäß eingesetzte wässrige Sol-Gel-Zusammensetzung (B) in einer Menge von 2 ± 0,2 g eingewogen und dann gemäß DIN EN ISO 3251 eingetrocknet.

In einer bevorzugten Ausführungsform weist die in der erfindungsgemäßen wässrigen Beschichtungszusammensetzung enthaltene Sol-Gel-Zusammensetzung (B) nach Hydrolyse und Kondensation der wenigstens einen Ausgangsverbindung einen Festkörpergehalt im Bereich von 0,1 bis 4 Gew-%, besonders bevorzugt in einem Bereich von 0,2 bis 3,5 Gew.-%, ganz besonders bevorzugt in einem Bereich von 0,3 bis 3 Gew.-%, insbesondere in einem Bereich von 0,4 bis 2,5 Gew.-% oder in einem Bereich von 0,5 bis 2 Gew.-% oder in einem Bereich von 0,5 bis 1,5 Gew.-% oder in einem Bereich von 0,5 bis 1 Gew.-%, jeweils bezogen auf das Gesamtgewicht der erfindungsgemäßen wässrigen Beschichtungszusammensetzung, auf.

Gegebenenfalls kann die wässrige Sol-Gel-Zusammensetzung (B) wenigstens ein weiteres Additiv enthalten, welches vorzugsweise ausgewählt ist aus der Gruppe bestehend aus hydrolytisch und pyrolytisch hergestellter Kieselsäure, organischen und anorganischen Nanopartikeln, welche jeweils vorzugsweise eine Teilchengröße im Bereich von 1 bis 150 nm aufweisen, welche mittels dynamischer Lichtstreuung gemäß DIN ISO 13 321 bestimmbar ist, wasserlöslichen oder wasserdispergierbaren organischen Polymeren, oberflächen-aktive Verbindungen wie Tenside, Emulgatoren, Antioxidantien, Benetzungsmitteln, Dispergiermitteln, Verlaufshilfsmitteln, Löslichkeitsvermittlern, Entschäumungsmitteln, Stabilisierungsmitteln, vorzugsweise Hitze-Stabilisatoren, Prozess-Stabilisatoren und UV- und/oder Licht-Stabilisatoren, Katalysatoren, Wachsen, Flexibilisierungsmitteln, Flammschutzmitteln, Reaktivverdünnern, Trägermedien, Harzen, Haftvermittlern, Prozesshilfsmitteln, Weichmachern, pulver- und faserförmige Feststoffen, vorzugsweise pulver- und faserförmige Feststoffe ausgewählt aus der Gruppe bestehend aus Füllstoffen, Glasfasern, und Verstärkern, und Gemischen aus den vorstehend genannten Additiven. Der Additiv-Gehalt in der erfindungsgemäß eingesetzten wässrigen Sol-Gel-Zusammensetzung (B) kann dabei je nach Verwendungszweck sehr breit variieren. Vorzugsweise liegt der Gehalt, jeweils bezogen auf das Gesamtgewicht der erfindungsgemäß eingesetzten wässrigen Sol-Gel-Zusammensetzung (B) bei 0,1 bis 10,0 Gew.-%, bevorzugt bei 0,1 bis 8,0 Gew.-%, besonders bevorzugt bei 0,1 bis 6,0 Gew.-%, ganz besonders bevorzugt bei 0,1 bis 4,0 Gew.-% und insbesondere bei 0,1 bis 2,0 Gew.-%, und Mischungen davon.

Vorzugsweise addieren sich die Anteile in Gew.-% aller in der erfindungsgemäß eingesetzten wässrigen Sol-Gel-Zusammensetzung (B) enthaltenen Komponenten und Additive einschließlich Wasser und gegebenenfalls vorhandener organischer Lösemittel auf insgesamt 100 Gew.-%, bezogen auf das Gesamtgewicht der Sol-Gel-Zusammensetzung (B).

**Verfahren zur Herstellung der Beschichtungszusammensetzung**

Ein weiterer Gegenstand der vorliegenden Erfindung ist ein Verfahren zur Herstellung der erfindungsgemäßen wässrigen Beschichtungszusammensetzung umfassend wenigstens die Schritte

(a1) Herstellen der wässrigen Sol-Gel-Zusammensetzung (B) durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung, und

(a2) Überführen der nach Schritt (a1) erhaltenen wässrigen Sol-Gel-Zusammensetzung (B) in eine wässrige Dispersion oder Lösung (A) wenigstens eines elektrophoretisch abscheidbaren Bindemittels und gegebenenfalls wenigstens eines Vernetzungsmittels.

Alle im Zusammenhang mit der erfindungsgemäßen wässrigen Beschichtungszusammensetzung hierin zuvor beschriebenen bevorzugten Ausführungsformen sind auch bevorzugte Ausführungsformen der erfindungsgemäßen wässrigen Beschichtungszusammensetzung hinsichtlich ihrer Herstellung.

Die wässrige Dispersion oder Lösung (A) kann dabei wenigstens eine der optionalen Komponenten (C), (D) und/oder (E) enthalten. Alternativ können diese gegebenenfalls in einem Schritt (a3) zu der nach Schritt (a2) erhaltenen Mischung zugegeben werden.

Vorzugsweise erfolgt die Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung innerhalb von Schritt (a1) des erfindungsgemäßen Verfahrens, durch

(a1-1) Herstellen einer Mischung umfassend wenigstens eine Verbindung (A1-1a), wenigstens eine Verbindung (A1-2) und wenigstens eine Verbindung (A1-3),

(a1-2) Umsetzung dieser Mischung mit Wasser in Gegenwart wenigstens einer Säure, vorzugsweise wenigstens einer Säure ausgewählt aus der Gruppe bestehend aus Phosphorsäure, Milchsäure, Essigsäure und Ameisensäure, vorzugsweise bei einem pH-Wert der resultierenden Mischung im Bereich von 2 bis 4,

(a1-3) Zugeben wenigstens einer Verbindung (A1-1b) zu der nach Schritt (a1-2) erhaltenen Mischung.

Vorzugsweise wird dabei
als Verbindung (A1-1a) eine Verbindung $Si(X^1)_3(R^1)$ eingesetzt,

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist, $X^1$ für $OR^a$ steht und $R^a$ für einen $C_{1-6}$-Alkyl-Rest steht,

als Verbindung (A1-1b) eine Verbindung $Si(X^1)_3(R^1)$ eingesetzt,

wobei $R^1$ darin für einen nicht hydrolysierbaren $C_1$-$C_{10}$-aliphatischen organischen Rest steht, welcher wenigstens eine primäre Amino-Gruppe als reaktive funktionelle Gruppe aufweist, $X^1$ für $OR^a$ steht und $R^a$ für einen $C_{1-6}$-Alkyl-Rest steht,

als Verbindung (A1-2) eine Verbindung $Si(X^1)_4$ eingesetzt,

worin $X^1$ für $OR^a$ steht und $R^a$ für einen $C_{1-6}$-Alkyl-Rest steht, und

als Verbindung (A1-3) eine Verbindung $Si(X^1)_3(R^1)$ eingesetzt,

wobei $R^1$ darin für einen nicht hydrolysierbaren organischen $C_1$-$C_{10}$-aliphatischen Rest steht, welcher keine reaktive funktionelle Gruppe aufweist, und $X^1$ für $OR^a$ steht und $R^a$ für einen $C_{1-6}$-Alkyl-Rest steht.

Vorzugsweise wird Schritt (a1-2) so lange durchgeführt, bis wenigstens 50 mol-% oder wenigstens 60 mol-% oder wenigstens 70 mol-%, besonders bevorzugt wenigstens 80 mol-% oder wenigstens 90 mol-%, der innerhalb der Verbindung (A1-1a) enthaltenen Epoxid-Gruppen, bezogen auf alle in (A1-1a) vorhandenen Epoxid-Gruppen in mol-%, zu Hydroxyl-Gruppen umgesetzt worden sind. Eine entsprechende Kontrolle der Umsetzung kann mittels $^1$H-Kernresonanzspektroskopie erfolgen.

Vorzugsweise wird Schritt (a1-3) so lange durchgeführt, bis sich innerhalb von 24 Stunden die elektrische Leitfähigkeit der nach Zugabe wenigstens einer Verbindung (A1-1b) resultierenden Mischung um nicht mehr als 0,05 mS/cm ändert.

Vorzugsweise liegt das relative Gewichtsverhältnis der Komponenten (A1-1a), (A1-1b), (A1-2) und (A1-3) bei der Herstellung von (B) gemäß der Schritte (a1-1) bis (a1-3) zueinander in einem Bereich von 2,2:0,5:1,2:1,2 bis 2:0,5:1:1.

## Verwendung

Ein weiterer Gegenstand der vorliegenden Erfindung ist eine Verwendung der erfindungsgemäßen wässrigen Beschichtungszusammensetzung zur zumindest teilweisen Beschichtung eines elektrisch leitfähigen Substrats mit einem Elektrotauchlack.

Alle im Zusammenhang mit der erfindungsgemäßen wässrigen Beschichtungszusammensetzung hierin zuvor beschriebenen bevorzugten Ausführungsformen sind auch bevorzugte Ausführungsformen der erfindungsgemäßen wässrigen Beschichtungszusammensetzung hinsichtlich ihrer Verwendung zur zumindest teilweisen Beschichtung eines elektrisch leitfähigen Substrats mit einem Elektrotauchlack.

## Verfahren zur Beschichtung

Ein weiterer Gegenstand der vorliegenden Erfindung ist ein Verfahren zur zumindest teilweisen Beschichtung eines elektrisch leitfähigen Substrats mit einem Elektrotauchlack umfassend wenigstens den Schritt

(b1) zumindest teilweise Beschichtung des Substrats mit der erfindungsgemäßen wässrigen Beschichtungszusammensetzung durch eine zumindest teilweise elektrophoretische Abscheidung dieser Beschichtungszusammensetzung auf der Substratoberfläche.

Alle im Zusammenhang mit der erfindungsgemäßen wässrigen Beschichtungszusammensetzung hierin zuvor beschriebenen bevorzugten Ausführungsformen sind auch bevorzugte Ausführungsformen hinsichtlich des Einsatzes der erfindungsgemäßen wässrigen Beschichtungszusammensetzung in Schritt (b1) des erfindungsgemäßen Verfahrens.

Vorzugsweise ist das erfindungsgemäße Verfahren ein Verfahren zur zumindest teilweisen Beschichtung eines im und/oder für den Automobilbau eingesetzten elektrisch leitfähigen Substrats. Das Verfahren kann kontinuierlich in Form einer Bandbeschichtung wie beispielsweise im Coil-Coating-Verfahren oder diskontinuierlich erfolgen.

Schritt (b1) des erfindungsgemäßen Verfahrens, d.h. die zumindest teilweise Beschichtung des Substrats mit der erfindungsgemäßen wässrigen Beschichtungszusammensetzung durch eine zumindest teilweise elektrophoretische Abscheidung dieser Beschichtungszusammensetzung auf der Substratoberfläche, erfolgt vorzugsweise mittels Anlegen einer elektrischen Spannung zwischen dem Substrat und wenigstens einer Gegenelektrode. Schritt (b1) des erfindungsgemäßen Verfahrens wird vorzugsweise in einem Tauchlackbad durchgeführt. Die Gegenelektrode befindet sich dabei vorzugsweise in dem Tauchlackbad. Gegebenenfalls kann die Gegenelektrode auch vom Tauchlackbad separiert vorliegen, beispielsweise über eine für Anionen permeable Anionenaustauscher-Membran. Dabei können Anionen, die während der Tauchlackierung gebildet werden, aus dem Lack durch die Membran in das Anolyt abtransportiert werden, wodurch der pH-Wert im Tauchlackbad reguliert bzw. konstant gehalten werden kann.

Vorzugsweise erfolgt in Schritt (b1) des erfindungsgemäßen Verfahrens eine vollständige Beschichtung des Substrats mit der erfindungsgemäßen wässrigen Beschichtungszusammensetzung durch eine vollständige elektrophoretische Abscheidung auf der gesamten Substratoberfläche.

Vorzugsweise wird in Schritt (b1) des erfindungsgemäßen Verfahrens ein zumindest teilweise zu beschichtendes Substrat zumindest teilweise, vorzugsweise vollständig, in ein Tauchlackbad eingeführt und in diesem Tauchlackbad Schritt (b1) durchgeführt.

In Schritt (b1) des erfindungsgemäßen Verfahrens wird eine zumindest teilweise Beschichtung des Substrats durch eine zumindest teilweise elektrophoretische Abscheidung der erfindungsgemäßen wässrigen Beschichtungszusammensetzung erzielt. Die erfindungsgemäße wässrige Beschichtungszusammensetzung wird dabei als Elektrotauchlack auf der Substratoberfläche abgeschieden.

Vorzugsweise wird die erfindungsgemäße wässrige Beschichtungszusammensetzung mit einer elektrisch leitenden Anode und mit dem als Kathode geschalteten elektrisch leitfähigen Substrat in Berührung gebracht. Alternativ muss die erfindungsgemäße wässrige Beschichtungszusammensetzung nicht direkt mit einer elektrisch leitenden Anode in Berührung gebracht werden, beispielsweise wenn die Anode vom Tauchlackbad separiert vorliegt, beispielsweise über eine für Anionen permeable Anionenaustauscher-Membran.

Beim Durchgang von elektrischem Strom zwischen Anode und Kathode wird ein fest haftender Lackfilm auf der Kathode, d.h. auf dem Substrat abgeschieden. Die angelegte Spannung liegt vorzugsweise in einem Bereich von 50 bis 500 Volt.

Schritt (b1) des erfindungsgemäßen Verfahrens wird vorzugsweise bei einer Tauchbadtemperatur in einem Bereich von 20 bis 45°C, noch bevorzugter in einem Bereich von 22 bis 42°C, besonders bevorzugt in einem Bereich von 24 bis 39°C, ganz besonders bevorzugt in einem Bereich von 26 bis 36°C, insbesondere bevorzugt in einem Bereich von 27 bis 33°C wie beispielsweise in einem Bereich von 28 bis 30°C durchgeführt. In einer anderen bevorzugten Ausführungsform des erfindungsgemäßen Verfahrens wird Schritt (b1) bei einer Tauchbadtemperatur von höchstens 40°C, noch bevorzugter von höchstens 38°C, besonders bevorzugt von höchstens 35°C, ganz besonders bevorzugt von höchstens 34°C oder von höchstens 33°C oder von höchstens 32°C oder von höchstens 31 °C oder von höchstens 30°C oder von höchstens 29°C oder von höchstens 28°C, durchgeführt. In einer weiteren anderen bevorzugten Ausführungsform des erfindungsgemäßen Verfahrens wird Schritt (b1) bei einer Tauchbadtemperatur ≤ 32°C wie beispielsweise ≤ 31 °C oder ≤ 30°C oder ≤ 29°C oder ≤ 28°C oder ≤ 27°C oder ≤ 26°C oder ≤ 25°C oder ≤ 24°C oder ≤ 23°C durchgeführt.

Vorzugsweise wird die erfindungsgemäße wässrige Beschichtungszusammensetzung in Schritt (b1) des erfindungsgemäßen Verfahrens so appliziert, dass die resultierende Elektrotauchlackschicht eine Trockenschichtdicke im Bereich von 5 bis 40 $\mu$m, besonders bevorzugt von 10 bis 30 $\mu$m, aufweist.

In einer bevorzugten Ausführungsform des erfindungsgemäßen Verfahrens wird Schritt (b1) in wenigstens zwei aufeinanderfolgenden Stufen (b1-a) und (b1-b) durchgeführt, nämlich

(b1-a) bei einer angelegten Spannung in einem Bereich von 1 bis 50 V, und
(b1-b) bei einer angelegten Spannung in einem Bereich von 50 bis 400 V, unter der Bedingung, dass die in Stufe (b1-b) angelegte Spannung um wenigstens 10 V größer ist als die in Stufe (b1-a) angelegte Spannung.

Innerhalb dieser bevorzugten Ausführungsform der vorliegenden Erfindung wird eine erfindungsgemäße wässrige Beschichtungszusammensetzung eingesetzt, die zudem wenigstens eine Komponente (E) enthält, d.h. wenigstens eine Metallionen-haltige Verbindung und/oder wenigstens eine zur Freisetzung von Metallionen geeignete metallatomhaltige Verbindung, wobei die Metallionen Ionen von Metallatomen ausgewählt aus der Gruppe bestehend aus Zr, Ti, Co, V, W, Mo, Cu, Zn, In, Bi, Y und Lanthaniden sind, besonders bevorzugt Bi, und wobei die Metallionen in der Beschichtungszusammensetzung in einer Konzentration im Bereich von 30 bis 20 000 ppm, bezogen auf das Gesamtgewicht der Beschichtungszusammensetzung in Gew.-%, enthalten sind.

Vorzugsweise beträgt die Abscheidungsstromdichte in Stufe (b1-a) mindestens 1 A/m$^2$, besonders bevorzugt mindestens 2 A/m$^2$ und insbesondere mindestens 3 A/m$^2$, vorzugsweise aber jeweils nicht mehr als 20 A/m$^2$, besonders bevorzugt jeweils nicht mehr als 10 A/m$^2$. Vorzugsweise wird die Abscheidungsstromdichte in Stufe (b1-a) dabei mindestens für 0,5 Sekunden, besonders bevorzugt mindestens für 10 Sekunden und insbesondere für mindestens 30 Sekunden und vorzugsweise jeweils maximal für 300 Sekunden, besonders bevorzugt jeweils für maximal 250 Sekunden und insbesondere maximal für 150 Sekunden, aufrechterhalten.

Vorzugsweise wird in Stufe (b1-b) in einem Zeitintervall im Bereich von 0 bis 300 Sekunden nach Beenden der Durchführung von Stufe (b1-a) eine Spannung im Bereich von 50 bis 400 V angelegt, vorzugsweise gegenüber einer inerten Gegenelektrode, jedoch unter der Bedingung, dass diese in Stufe (b1-b) angelegte Spannung um wenigstens 10 V größer ist als die zuvor in Stufe (b1-a) angelegte Spannung. Vorzugsweise wird diese Spannung innerhalb der Durchführung von Stufe (b1-b) für einen Zeitraum im Bereich von 10 bis 300 Sekunden bei wenigstens einem Wert innerhalb des genannten Spannungsbereichs von 50 bis 400 V unter der vorstehend genannten Bedingung gehalten.

Die Spannungserhöhung von Stufe (b1-a) zu Stufe (b1-b) kann "plötzlich" erfolgen, also beispielsweise durch entsprechendes Umschalten an einem Gleichrichter, was eine gewisse technisch bedingte Mindestzeitdauer zum Erreichen der Sollspannung erfordert. Die Spannungserhöhung kann aber auch in Form einer Rampe erfolgen, also zumindest annähernd kontinuierlich über einen wählbaren Zeitraum, beispielsweise von bis zu 10, 20 30, 40, 50, 60, 120 oder 300 Sekunden. Bevorzugt ist eine Rampe von bis zu 120 Sekunden, besonders bevorzugt von bis zu 60 Sekunden. Auch eine stufenförmige Spannungserhöhung ist möglich, wobei bei jeder Spannungsstufe vorzugsweise eine gewisse Haltezeit bei dieser Spannung eingehalten wird, beispielsweise 1, 5, 10 oder 20 Sekunden. Auch eine Kombination von Rampen und Stufen ist möglich.

Die Angabe eines Zeitraums wie beispielsweise eines Zeitraums im Bereich von 10 bis 300 Sekunden für das Anlegen der Spannung in Stufe (b1-b) in einem Bereich von 50 bis 400 V kann bedeuten, dass diese während des genannten Zeitraums konstant gehalten wird. Die Spannung kann alternativ aber auch während der Abscheidungsdauer innerhalb von Stufe (b1-b) innerhalb der angegeben Minimum- und Maximalwerte im Bereich von 50 bis 400 V unterschiedliche Werte annehmen, beispielsweise hin und her pendeln oder rampen- oder stufenförmig von der Minimalzur Maximalabscheidungsspannung ansteigen.

Die Spannung, d.h. Abscheidungsspannung, in Stufe (b1-b) kann auch in Form von Pulsen geregelt werden, mit Zeiten ohne Strom bzw. mit einer Abscheidungsspannung unterhalb des Minimalwerts zwischen zwei Pulsen. Die Pulsdauer kann beispielsweise im Bereich von 0,1 bis 10 Sekunden liegen. Als "Zeitraum" für die Abscheidung wird dann vorzugsweise die Summe der Zeitdauern angesehen, bei denen die Abscheidungsspannung innerhalb der genannten Höchst- und Tiefstwerte bei der Durchführung von Schritt (b1-b) liegt. Rampen und Pulse können auch miteinander kombiniert werden.

Nach Durchführung von Stufe (b1-a) bildet sich je nach Art der eingesetzten Metallionen eine entsprechende Metall-angereicherte Schicht auf dem elektrisch leitfähigen Substrat, welche sich beispielsweise durch Röntgenfluoreszenzanalyse nachweisen und quantifizieren lässt. Die so gebildete Metall-angereicherte Schicht übt vorzugsweise eine korrosionsschützende Wirkung aus, welche umso ausgeprägter ist, je größer die Metall-Schichtauflage (in mg Metall pro $m^2$ Oberfläche) ist. Bevorzugt werden Schichtauflagen von mindestens 10, bevorzugt mindestens 50 und insbesondere mindestens 150 mg Metall (als Metall gerechnet) pro $m^2$ Oberfläche.

Vorzugsweise umfasst das erfindungsgemäße Verfahren ferner einen Schritt (b2), der vorzugsweise auf den Schritt (b1) folgt, welcher wie vorstehend ausgeführt zweit Stufen (b1-a) und (b1-b) vorsehen kann, nämlich eine

(b2) Spülung des nach Schritt (b1) erhältlichen mit der erfindungsgemäßen wässrigen Beschichtungszusammensetzung zumindest teilweise beschichteten Substrats mit Wasser und/oder mit Ultrafiltrat.

Der Begriff "Ultrafiltrat" bzw. "Ultrafiltration" insbesondere im Zusammenhang mit der Elektrotauchlackierung ist dem Fachmann bekannt und beispielsweise definiert im Römpp Lexikon, Lacke und Druckfarben, Georg Thieme Verlag 1998.

Die Durchführung des Schritts (b2) ermöglicht die Rückführung überschüssiger nach Schritt (b1) auf dem zumindest teilweise beschichteten Substrat befindlicher Bestandteile der erfindungsgemäßen wässrigen Beschichtungszusammensetzung in das Tauchlackbad.

Das erfindungsgemäße Verfahren kann ferner einen optionalen Schritt (b3), der vorzugsweise auf den Schritt (b1) oder (b2), besonders bevorzugt auf den Schritt (b2) folgt, umfassen, nämlich ein

(b3) Kontaktieren des nach Schritt (b1) oder Schritt (b2), vorzugsweise nach Schritt (b2), erhältlichen mit der erfindungsgemäßen wässrigen Beschichtungszusammensetzung zumindest teilweise beschichteten Substrats mit Wasser und/oder Ultrafiltrat, vorzugsweise über eine Dauer von 30 Sekunden bis zu einer Stunde, besonders bevorzugt über eine Dauer von 30 Sekunden bis zu 30 Minuten.

In einer bevorzugten Ausführungsform umfasst das erfindungsgemäße Verfahren ferner wenigstens einen Schritt (b4), der vorzugsweise auf den Schritt (b1) und/oder (b2) und/oder (b3) folgt, aber vorzugsweise noch vor einem optionalen Schritt (b5) durchgeführt wird, nämlich das

(b4) Aufbringen wenigstens einer weiteren Lackschicht auf das nach Schritt (Schritt (b1) und/oder (b2) und/oder (b3) erhältliche mit der erfindungsgemäßen wässrigen Beschichtungszusammensetzung zumindest teilweise beschichtete Substrat.

Mittels des Schrittes (b4) können ein oder mehrere weitere Lackschichten auf das nach (Schritt (b1) und/oder (b2) und/oder (b3) erhältliche mit der erfindungsgemäßen wässrigen Beschichtungszusammensetzung zumindest teilweise beschichtete Substrat aufgebracht werden. Sollen mehrere Schichten aufgebracht werden, kann Schritt (b4) entsprechend oft wiederholt werden. Beispiele weiterer aufzubringender Lackschichten sind beispielsweise Basislackschichten, Füllerschichten und/oder ein- oder mehrschichtige Decklackschichten. Dabei kann die gemäß Schritt (b1) aufgebrachte erfindungsgemäße wässrige Beschichtungszusammensetzung, gegebenenfalls nachdem sie einer optionalen Spülung mit Wasser und/oder Ultrafiltrat (gemäß Schritt (b2)) unterworfen worden ist, gehärtet werden, wobei diese Härtung wie nachfolgend beschrieben gemäß einem Schritt (b5) erfolgt, bevor eine weitere Schicht wie eine Basislackschicht, Füllerschicht und/oder eine ein- oder mehrschichtige Decklackschicht aufgebracht wird. Alternativ kann aber die gemäß Schritt (b1) aufgebrachte erfindungsgemäße wässrige Beschichtungszusammensetzung, gegebenenfalls nachdem sie einer optionalen Spülung mit Wasser und/oder Ultrafiltrat (gemäß Schritt (b2)) unterworfen worden ist, nicht gehärtet werden, sondern zunächst eine weitere Schicht wie eine Basislackschicht, Füllerschicht und/oder eine ein- oder mehrschichtige Decklackschicht aufgebracht werden ("Nass-in-Nass-Verfahren"). Nach Aufbringen dieser weiteren Schicht(en) wird in diesem Fall das so erhaltene Gesamtsystem gehärtet, wobei diese Härtung wie nachfolgend beschrieben vorzugsweise gemäß einem Schritt (b5) erfolgen kann.

In einer bevorzugten Ausführungsform umfasst das erfindungsgemäße Verfahren ferner wenigstens einen Schritt (b5), nämlich eine

(b5) Aushärtung der nach Schritt (b1) und/oder (b2) und/oder (b3) zumindest teilweise auf dem Substrat aufgebrachten erfindungsgemäßen wässrigen Beschichtungszusammensetzung oder der nach Schritt (b1) und/oder (b2) und/oder (b3) und/oder (b4) zumindest teilweise auf dem Substrat aufgebrachten Beschichtung.

Schritt (b5) des erfindungsgemäßen Verfahrens wird vorzugsweise mittels Einbrennen nach Schritt (b1) oder gegebenenfalls erst nach wenigstens einem weiteren Schritt (b4) durchgeführt. Schritt (b5) erfolgt vorzugsweise in einem Ofen. Die Aushärtung erfolgt dabei vorzugsweise bei einer Substrattemperatur im Bereich von 140°C bis 200°C, besonders bevorzugt in einem Bereich von 150°C bis 190°C, ganz besonders bevorzugt in einem Bereich von 160°C bis 180°C. Schritt (b5) erfolgt vorzugsweise über eine Dauer von wenigstens 2 Minuten bis 2 Stunden, besonders bevorzugt über eine Dauer von wenigstens 5 Minuten bis 1 Stunde, ganz besonders bevorzugt über eine Dauer von wenigstens 10 Minuten bis 30 Minuten.

## Zumindest teilweise beschichtetes Substrat

Ein weiterer Gegenstand der vorliegenden Erfindung ist ein zumindest teilweise mit der erfindungsgemäßen wässrigen Beschichtungszusammensetzung beschichtetes elektrisch leitfähiges Substrat.

Ein weiterer Gegenstand der vorliegenden Erfindung ist ein aus wenigstens einem solchen Substrat hergestellter Gegenstand oder hergestelltes Bauteil.

Solche Gegenstände können beispielsweise Metallbänder sein. Solche Bauteilen können zum Beispiel Karosserien und deren Teile von Automobilen wie Personenkraftwagen, Lastwagen, Motorrädern und Autobussen, und Bauteile von elektrischen Haushaltsprodukten oder auch Bauteilen aus dem Bereich der Geräteverkleidungen, Fassadenverkleidungen, Deckenverkleidungen oder Fensterprofilen sein.

Die vorliegende Erfindung betrifft zudem ein aus wenigstens einem elektrisch leitfähigen zumindest teilweise beschichteten Substrat, welches gemäß dem erfindungsmäßen Verfahren erhältlich ist, hergestelltes Bauteil oder hergestellten Gegenstand, vorzugsweise ein metallisches Bauteil.

## Bestimmungsmethoden

**1**. *Kupferbeschleunigte Essigsäure-Salzsprühnebelprüfung gemäß DIN EN ISO 9227 CASS*

Die kupferbeschleunigte Essigsäure-Salzsprühnebelprüfung dient der Ermittlung der Korrosionsbeständigkeit einer Beschichtung auf einem Substrat. Die kupferbeschleunigte Essigsäure-Salzsprühnebelprüfung wird gemäß DIN EN ISO 9227 CASS für das mit einer erfindungsgemäßen Beschichtungszusammensetzung oder mit einer Vergleichsbeschichtungszusammensetzung beschichtete elektrisch leitfähige Substrat Aluminium (AA6014 (ALU)) durchgeführt. Die zu untersuchenden Proben werden dabei in einer Kammer, in der bei einer Temperatur von 50 °C kontinuierlich über eine Dauer von 240 Stunden eine 5%ige Kochsalzlösung mit kontrolliertem pH-Wert vernebelt wird, wobei der Salzlösung Kupferchlorid und Essigsäure zugegeben wird. Der Nebel schlägt sich auf den zu untersuchenden Proben nieder und überzieht diese mit einem korrosiv wirkenden Salzwasserfilm. Nach Durchführung der kupferbeschleunigten Essigsäure-Salzsprühnebelprüfung gemäß DIN EN ISO 9227 CASS werden die Proben zur Beurteilung ihres Rostgrades gemäß DIN EN ISO 4628-3 untersucht. Die Beurteilung erfolgt anhand von Kennwerten im Bereich von 0 (kein Rost) bis 5 (sehr hoher Rostgrad). Wird die Beschichtung der zu untersuchenden Proben noch vor der kupferbeschleunigten Essigsäure-Salzsprühnebelprüfung gemäß DIN EN ISO 9227 CASS mit einem Messerschnitt bis zum Substrat eingeritzt, so können die Proben hinsichtlich ihres Unterwanderungsgrades gemäß DIN EN ISO 4628-8 untersucht werden, da das Substrat während der kupferbeschleunigten Essigsäure-Salzsprühnebelprüfung gemäß DIN EN ISO 9227 CASS entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

**2**. *VDA-Klimawechseltest nach VDA 621-415*

Dieser Klimawechseltest dient der Ermittlung der Korrosionsbeständigkeit einer Beschichtung auf einem Substrat. Der Klimawechseltest wird für das mit einer erfindungsgemäßen Beschichtungszusammensetzung oder mit einer Vergleichsbeschichtungszusammensetzung beschichtete elektrisch leitfähige Substrat tauchverzinkter Stahl (HDG) durchgeführt. Der Klimawechseltest wird dabei in 10 sogenannten Zyklen durchgeführt. Ein Zyklus besteht dabei aus insgesamt 168 Stunden (1 Woche) und umfasst

a) 24 Stunden einer Salzsprühnebelprüfung gemäß DIN EN ISO 9227,
b) gefolgt von 8 Stunden einer Lagerung bei Konstantklima gemäß DIN 50017,
c) gefolgt von 16 Stunden einer Lagerung bei Raumklima gemäß DIN 50014,
d) 3-fache Wiederholung von b) und c) (insgesamt also 72 Stunden), und
e) 48 Stunden einer Lagerung bei Raumklima gemäß DIN 50014.

Nach Durchführung des Klimawechseltests wird die jeweilige Probe zur Beurteilung ihres Rostgrades gemäß DIN EN ISO 4628-3 untersucht. Die Beurteilung erfolgt anhand von Kennwerten im Bereich von 0 (kein Rost) bis 5 (sehr hoher Rostgrad). Wird die jeweils eingebrannte Beschichtungs-zusammensetzung der zu untersuchenden Proben noch vor der Durchführung des Klimawechseltests mit einem Messerschnitt bis zum Substrat eingeritzt, so können die Proben hinsichtlich ihres Unterwanderungsgrades gemäß DIN EN ISO 4628-8 bzw. hinsichtlich untersucht werden, da das Substrat während der der Durchführung des Klimawechseltests entlang der Ritzlinie korrodiert. Durch den fortschreitenden Korrosionsvorgang wird die Beschichtung während der Prüfung mehr oder weniger stark unterwandert. Der Unterwanderungsgrad in [mm] ist ein Maß für die Beständigkeit der Beschichtung.

Die nachfolgenden Beispiele dienen der Erläuterung der Erfindung, sind jedoch nicht einschränkend auszulegen.

Sofern nicht anders angeführt, handelt es sich bei den Angaben in Prozenten jeweils um Gewichtsprozente.

**Beispiele und Vergleichsbeispiele**

**1**. Herstellung von erfindungsgemäß als Komponente (B) eingesetzten Sol-Gel-Zusammensetzungen

*Wässrige Sol-Gel-Zusammensetzung S1*

Eine Mischung aus 77,5 g Tetraethoxysilan (TEOS), 77,5 g Methyltriethoxysilan (MTEOS), 155,0 g 3-Glycidylpropyltrimethoxysilan (GLYMO), 38,8 g Snowtex®-O (kolloidales $SiO_2$), 4603,0 g VE-Wasser und 9,5 g Ameisensäure (85 Gew.-%) wird für 168 Stunden bei Raumtemperatur (18-23°C) gerührt. Danach wird die Mischung unter Rühren mit 38,75 g 3-Aminopropyltriethoxysilan (AMEO) versetzt und für weitere 168 Stunden bei Raumtemperatur gerührt. Es wird eine klare leicht gelbliche Lösung mit einem pH-Wert von 5,0 erhalten.

*Wässrige Sol-Gel-Zusammensetzung S2*

Eine Mischung aus 80,7 g Tetraethoxysilan (TEOS), 80,7 g Methyltriethoxysilan (MTEOS), 161,4 g 3-Glycidylpropyltrimethoxysilan (GLYMO), 4626,9 g VE-Wasser und 10,0 g Ameisensäure (85 Gew.-%) wird für 168 Stunden bei Raumtemperatur (18-23°C) gerührt. Danach wird die Mischung unter Rühren mit 40,4 g 3-Aminopropyltriethoxysilan (AMEO) versetzt und für weitere 168 Stunden bei Raumtemperatur gerührt. Es wird eine klare leicht gelbliche Lösung mit einem pH-Wert von 5,0 erhalten.

Tabelle 1 gibt einen Überblick über die wässrigen Sol-Gel-Zusammensetzungen S1 und S2.

Tabelle 1.

| Sol-Gel-Zusammensetzung | S1 | S2 |
|---|---|---|
| TEOS / Gew.-% | 1,55 | 1,61 |
| MTEOS / Gew.-% | 1,55 | 1,61 |
| GLYMO / Gew.-% | 3,10 | 3,23 |
| Snowtex®-O / Gew.-% | 0,78 | - |
| Ameisensäure (85 Gew.-%) / Gew.-% | 0,19 | 0,20 |
| Deionisiertes Wasser / Gew.-% | 92,05 | 92,54 |
| AMEO / Gew.-% | 0,78 | 0,81 |
| Festkörpergehalt (berechnet) / Gew.-% | 4,00 | 4,00 |

Die Gew.-%-Angaben beziehen sich jeweils auf das Gesamtgewicht der wässrigen Sol-Gel-Zusammensetzung.

Wie aus Tabelle 1 hervorgeht, weist die Sol-Gel-Zusammensetzung S2 einen berechneten Festkörpergehalt von 4,00 Gew.-%, bezogen auf das Gesamtgewicht der Zusammensetzung S2, auf. Dieser Festkörpergehalt ist im Fall von S2 dabei die Summe der berechneten Festkörpergehalte der einzelnen eingesetzten Komponenten TEOS, MTEOS und GLYMO sowie AMEO.

Beispielhaft wird im Folgenden der theoretisch berechnete Festkörpergehalt von TEOS (Summenformel $C_8H_{20}O_4Si$) innerhalb S2 bestimmt. Dieser wird mittels der allgemeinen Formel

$$FK_{theo} = \frac{M_{kond}}{M_{start}} \cdot Anteil_{Rezept}$$

berechnet, worin

FK_{theo} = theoretisch berechneter Festkörpergehalt von TEOS in S1 in Gew.-%
$M_{kond}$ = 60,05 g/mol (molare Masse von TEOS in vollständig kondensierter Form; entspricht einer Summenformel von O(4/2)Si)
$M_{start}$ = 208,33 g/mol (molare Masse von TEOS)
$Anteil_{Rezept}$ = 1,61 Gew.-% (Anteil von TEOS in der Zusammensetzung in Gew.-%).

Es ergibt sich ein theoretisch berechneter Festkörpergehalt von 0,46 Gew.-% für TEOS. Analog kann eine entsprechende Berechnung für MTEOS und GLYMO sowie AMEO erfolgen. Insgesamt ergibt sich so ein gesamter theoretisch berechneter Festkörpergehalt von 4,00 Gew.-% für S2 (siehe Tabelle 1).

**2.** Herstellung von erfindungsgemäßen wässrigen Beschichtungszusammensetzungen (Z1 und Z2) und einer wässrigen Vergleichsbeschichtungszusammensetzung Z3

Zu einer wässrigen Dispersion (A) eines Bindemittels und eines Vernetzungsmittels und einer Pigmentpaste wird entweder die Sol-Gel-Zusammensetzung S1 oder die Sol-Gel-Zusammensetzung S2 unter Rühren bei Raumtemperatur (18-23°C) gegeben und so die erfindungsgemäßen wässrigen Beschichtungszusammensetzungen Z1 und Z2 erhalten. Dabei werden jeweils insgesamt 2215 g der wässrigen Dispersion (A), 295 g Pigmentpaste, 1552,5 g deionisiertes Wasser und 937,5 S1 bzw. S2 eingesetzt. Zudem wird eine wässrige Vergleichsbeschichtungszusammensetzung Z3 aus einer wässrigen Dispersion eines Bindemittels (A) (2215 g), deionisiertem Wasser (2490 g) und einer Pigmentpaste (295 g) hergestellt, d.h. eine entsprechende Beschichtungszusammensetzung, die keine Sol-Gel-Zusammensetzung enthält.
Tabelle 2 gibt einen Überblick über die erfindungsgemäßen wässrigen Beschichtungszusammensetzungen Z1 und Z2 sowie über die wässrige Vergleichsbeschichtungszusammensetzung Z3:

Tabelle 2.

| Beispiele Z1 und Z2 wässriger Beschichtungszusammensetzungen sowie Vergleichsbeispiel Z3 | Z1 | Z2 | Z3* |
|---|---|---|---|
| Wässrige Dispersion (A) eines Bindemittels und eines Vernetzungsmittels / Gew.-% | 44,3 | 44,3 | 44,3 |
| S1 / Gew.-% | 18,75 | - | - |
| S2 / Gew.-% | - | 18,75 | - |
| Deionisiertes Wasser / Gew.-% | 31,05 | 31,05 | 49,8 |
| Pigmentpaste / Gew.-% | 5,9 | 5,9 | 5,9 |
| * = nicht erfindungsgemäß | | | |

Als wässrige Dispersion (A) wird das kommerziell erhältliche Produkt CathoGuard® 520 der Firma BASF eingesetzt. Diese eingesetzte wässrige Dispersion weist einen Festkörpergehalt von 37,5 Gew.-% auf.

**3.** Herstellung von beschichteten elektrisch leitfähigen Substraten mit den erfindungsgemäßen wässrigen Beschichtungszusammensetzungen Z1 bzw. Z2 und der Vergleichsbeschichtungszusammensetzung Z3

Die wässrigen Beschichtungszusammensetzungen Z1 und Z2 bzw. Z3 werden jeweils als Tauchlackbeschichtungen auf unterschiedliche Substrate appliziert. Dabei wird jede der erfindungsgemäßen wässrigen Beschichtungszusammensetzungen Z1 und Z2 direkt nach ihrer Herstellung über eine Dauer von 24 bei Raumtemperatur (18-23°C) gerührt und dann auf die unterschiedlichen Substrate appliziert. Zudem wird jede der erfindungsgemäßen wässrigen Beschichtungszusammensetzungen Z1 und Z2 direkt nach ihrer Herstellung für 14 Tage bei Raumtemperatur (18-23°C) gerührt und erst dann auf die unterschiedlichen Substrate appliziert, um das Verhalten der so aufgebrachten Tauchlackbeschichtungen als Funktion der Zeit untersuchen zu können.
Es werden jeweils zwei Arten von Testblechen, nämlich T1 (tauchverzinkter Stahl (HDG)) und T2 (Aluminium AA6014 (ALU)) als Beispiele elektrisch leitfähiger Substrate eingesetzt.

Diese werden zunächst jeweils durch Eintauchen der Bleche in ein Bad enthaltend eine wässrige Lösung enthaltend die kommerziell erhältlichen Produkte Ridoline 1565-1 (3,0 Gew.-%) und Ridosol 1400-1 (0,3 % Gew.-%) der Firma Henkel sowie Wasser (96,7 Gew.-%) über eine Dauer von 1,5 Minuten bei einer Temperatur von 62°C gereinigt. Danach wird eine mechanische Reinigung (mittels Pinseln) durchgeführt und die Bleche im Anschluss wiederum für eine Dauer von 1,5 Minuten erneut in das Bad eingetaucht.

Die auf diese Weise gereinigten Substrate werden im Anschluss mit Wasser (über die Dauer von 1 Minute) und deionisiertem Wasser (über die Dauer von 1 Minute) gespült.

Im direkten Anschluss wird auf jedes Blech T1 und T2 eine der erfindungsgemäßen wässrigen Beschichtungszusammensetzungen Z1 und Z2 oder eine Vergleichsbeschichtungszusammensetzung Z3 appliziert, indem das jeweilige Blech jeweils in ein entsprechendes eine der Zusammensetzungen Z1 oder Z2 bzw. Z3 enthaltenes Tauchlackbad getaucht wird. Dabei weist das Tauchlackbad jeweils eine Badtemperatur von 32°C auf. Die Rührgeschwindigkeit beträgt 600 Umdrehungen pro Minute.

Anschließend werden die so erhaltenen Beschichtungen jeweils bei 175 °C (Ofentemperatur) über eine Dauer von 25 min eingebrannt.

Insgesamt werden so zehn voneinander verschiedene beschichtete Substrate erhalten.

Die Tabellen 3a und 3b geben einen Überblick über die so erhaltenen beschichteten Substrate.

Tabelle 3a:

|  | Beispiel B1a* | Beispiel B1b# | Beispiel B2a* | Beispiel B2b# | Vergleichsbeispiel V1* |
|---|---|---|---|---|---|
| Substrat | T1 (HDG) | T1 (HDG) | T1 (HDG) | T1 (HDG) | T1 (HDG) |
| eingesetzte wässrige Beschichtungszusammensetzung | Z1 | Z1 | Z2 | Z2 | Z3 |
| * = Applikation 24 h nach Herstellung der wässrigen Beschichtungszusammensetzung auf das Substrat <br> # = Applikation 14 Tage nach Herstellung der wässrigen Beschichtungszusammensetzung auf das Substrat | | | | | |

Tabelle 3b:

|  | Beispiel B1c* | Beispiel B1d# | Beispiel B2c* | Beispiel B2d# | Vergleichsbeispiel V2* |
|---|---|---|---|---|---|
| Substrat | T2 (ALU) | T2 (ALU) | T2 (ALU) | T2 (ALU) | T2 (ALU) |
| eingesetzte wässrige Beschichtungszusammensetzung | Z1 | Z1 | Z2 | Z2 | Z3 |
| * = Applikation 24 h nach Herstellung der wässrigen Beschichtungszusammensetzung auf das Substrat <br> # = Applikation 14 Tage nach Herstellung der wässrigen Beschichtungszusammensetzung auf das Substrat | | | | | |

Die Trockenschichtdicken der auf die jeweiligen Substrate eingebrannten erfindungsgemäßen wässrigen Beschichtungszusammensetzungen betragen jeweils 20 $\mu$m.

4. Untersuchung der Korrosionsschutzwirkung der beschichteten Substrate

Alle nachstehenden Prüfungen wurden entsprechend der vorstehend angegebenen Bestimmungsmethoden und der entsprechenden Norm durchgeführt. Jeder Wert in Tabelle 4 bzw. Tabelle 5 ist der Mittelwert (mit Standardabweichung) aus einer Dreifachbestimmung.

Tabelle 4:

|  | Beispiel B1a | Beispiel B1b | Beispiel B2a | Beispiel B2b | Vergleichsbeispiel V1 |
|---|---|---|---|---|---|
| Substrat | T1 (HDG) | T1 (HDG) | T1 (HDG) | T1 (HDG) | T1 (HDG) |
| VDA-Klimawechseltest nach VDA 621-415, 10 Zyklen | $3,3\pm0,4^a$ $0,3\pm0,6^b$ | $3,3\pm0,2^a$ $0,3\pm0,6^b$ | $3,4\pm0,4^a$ $0,0\pm0,0^b$ | $3,4\pm0,3^a$ $0,0\pm0,0^b$ | $4,7\pm0,5^a$ $0,3\pm0,6^b$ |
| [a] = Unterwanderung [mm] gemäß DIN EN ISO 4628-8 [b] = Flächenrost gemäß DIN EN ISO 4628-3 | | | | | |

Tabelle 5:

|  | Beispiel B1c | Beispiel B1d | Beispiel B2c | Beispiel B2d | Vergleichsbeispiel V2 |
|---|---|---|---|---|---|
| Substrat | T2 (ALU) | T2 (ALU) | T2 (ALU) | T2 (ALU) | T2 (ALU) |
| Kupferbeschleunigte Essigsäure-Salzsprühnebelprüfung (DIN EN ISO 9227 CASS), 240 h | $1,3\pm0,1^a$ $1,0\pm0^b$ | $1,2\pm0,2^a$ $1,0\pm0^b$ | $1,0\pm0,1^a$ $1,0\pm0^b$ | $0,9\pm0,1^a$ $1,0\pm0^b$ | $3,7\pm0,2^a$ $2,7\pm1,2^b$ |
| [a] = Unterwanderung [mm] gemäß DIN EN ISO 4628-8 [b] = Flächenrost gemäß DIN EN ISO 4628-3 | | | | | |

Wie aus den Tabellen 4 und 5 ersichtlich ist, zeichnen sich die mittels der erfindungsgemäßen wässrigen Beschichtungszusammensetzung beschichteten Substrate im Vergleich zu den Vergleichsbeispielen V1 und V2 durchweg durch eine verbesserte Korrosionsschutzwirkung aus. Insbesondere ist beispielsweise erkennbar, dass die Unterwanderung in [mm] nach Durchführung des VDA-Klimawechseltests (Beispiele B1 a, B1 b, B2a und B2b vs. Vergleichsbeispiel V1) bzw. nach Durchführung der kupferbeschleunigten Essigsäure-Salzsprühnebelprüfung gemäß DIN EN ISO 9227 CASS (Beispiele B1c, B1d, B2c und B2d vs. Vergleichsbeispiel V2) um mehr als 75% geringer ausfallen kann. Zudem zeigen insbesondere die Beispiele B1 a, B1 b, B2a und B2b im Vergleich zu Vergleichsbeispiel V2 nach Durchführung der kupferbeschleunigten Essigsäure-Salzsprühnebelprüfung gemäß DIN EN ISO 9227 CASS einen wesentlich geringeren Flächenrost.

**Patentansprüche**

1. Eine wässrige Beschichtungszusammensetzung umfassend

   (A) wenigstens eine wässrige Dispersion oder Lösung wenigstens eines elektrophoretisch abscheidbaren Bindemittels und gegebenenfalls wenigstens eines Vernetzungsmittels und
   (B) wenigstens eine wässrige Sol-Gel-Zusammensetzung,

   zur zumindest teilweisen Beschichtung eines elektrisch leitfähigen Substrats mit einem Elektrotauchlack,

   wobei das elektrophoretisch abscheidbare Bindemittel kathodisch abscheidbar und ein polymeres Harz ist, das reaktive funktionelle Gruppen aufweist, welche mit dem gegebenenfalls vorhandenen Vernetzungsmittel eine Vernetzungsreaktion ermöglichen, und
   wobei die wässrige Sol-Gel-Zusammensetzung (B) durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung erhältlich ist,

   wobei die wenigstens eine Ausgangsverbindung wenigstens ein Metallatom und/oder Halbmetallatom und wenigstens zwei hydrolysierbare Gruppen und wenigstens einen nicht hydrolysierbaren organischen Rest aufweist.

2.  Die wässrige Beschichtungszusammensetzung gemäß Anspruch 1, **dadurch gekennzeichnet, dass** die in der wässrigen Beschichtungszusammensetzung enthaltene Sol-Gel-Zusammensetzung (B) nach Hydrolyse und Kondensation der wenigstens einen Ausgangsverbindung einen Festkörpergehalt im Bereich von 0,1 bis 40 Gew-%, bezogen auf das Gesamtgewicht der wässrigen Beschichtungszusammensetzung, aufweist.

3.  Die wässrige Beschichtungszusammensetzung gemäß Anspruch 1 oder 2, **dadurch gekennzeichnet, dass** die zur Herstellung der wässrigen Beschichtungszusammensetzung eingesetzte Sol-Gel-Zusammensetzung (B) erhältlich ist durch Umsetzung wenigstens einer Verbindung

    (A1)         $(M^1)^x(X^1)_a(R^1)$,

    und/oder

    (A2)         $(M^2)^y(X^2)_b(R^2)(R^3)$

    mit Wasser, worin

    $M^1$ und $M^2$ jeweils unabhängig voneinander für ein Metallatom oder ein Halbmetallatom stehen,
    $X^1$ und $X^2$ jeweils unabhängig voneinander für eine hydrolysierbare Gruppe stehen,
    x für die Wertigkeit des Metallatoms oder Halbmetallatoms $M^1$ steht,
    y für die Wertigkeit des Metallatoms oder Halbmetallatoms $M^2$ steht,
    $R^1$ für $X^1$, einen nicht hydrolysierbaren organischen Rest, für $(T)(M^1)^x(X^1)_c$ oder für $(U)[(M^1)^x(X^1)_c]_2$, steht,
    $R^2$ für einen nicht hydrolysierbaren organischen Rest steht,
    $R^3$ für einen nicht hydrolysierbaren organischen Rest, für $(T)(M^1)^x(X^1)_c$, für $(U)[(M^1)^x(X^1)_c]_2$, für $(V)(M^1)^y(X^2)_d(R^2)$ oder für $(W)[(M^2)^y(X^2)_d(R^2)]_2$ steht,
    a für x steht, wenn $R^1$ für $X^1$ steht oder
    a für x-1 steht, wenn $R^1$ für einen nicht hydrolysierbaren organischen Rest, für $(T)(M^1)^x(X^1)_c$ oder für $(U)[(M^1)^x(X^1)_c]_2$ steht, jeweils unter der Voraussetzung, dass a mindestens für 2 steht,
    b für y-2 steht, unter der Voraussetzung, dass b mindestens für 2 steht,
    T, U, V und W jeweils unabhängig voneinander für einen Rest steht, der 1 bis 30 Kohlenstoffatome aufweist und gegebenenfalls bis zu 10 Heteroatome und Heteroatomgruppen ausgewählt aus der Gruppe bestehend aus O, S und N aufweisen kann,
    c für x-1 steht, und
    d für y-2 steht.

4.  Die wässrige Beschichtungszusammensetzung gemäß Anspruch 3, **dadurch gekennzeichnet, dass**
    $X^1$ und $X^2$ jeweils unabhängig voneinander ausgewählt sind aus der Gruppe bestehend aus Halogeniden und Alkoxy-Gruppen $O-R^a$, worin $R^a$ jeweils für einen $C_{1-16}$-aliphatischen Rest steht, und
    $M^1$ und $M^2$ jeweils unabhängig voneinander ausgewählt sind aus der Gruppe bestehend aus Al, Ti, Zr, Fe, B und Si.

5.  Die wässrige Beschichtungszusammensetzung gemäß Anspruch 3 oder 4, **dadurch gekennzeichnet, dass** wenigstens eine Verbindung (A1) als wenigstens eine Ausgangsverbindung eingesetzt wird, in der $R^1$ für einen nicht hydrolysierbaren organischen Rest steht, welcher wenigstens eine reaktive funktionelle Gruppe ausgewählt aus der Gruppe bestehend aus primären Amino-Gruppen, sekundären Amino-Gruppen, Epoxid-Gruppen, Thiol-Gruppen, Isocyanat-Gruppen, phosphorhaltigen Gruppen, und Gruppen, die eine ethylenisch ungesättige Doppelbindung aufweisen, aufweist,
    und gegebenenfalls wenigstens eine weitere Verbindung (A1) als wenigstens eine Ausgangsverbindung eingesetzt wird, in der $R^1$ für $X^1$ steht,
    und gegebenenfalls wenigstens eine weitere Verbindung (A1) als wenigstens eine Ausgangsverbindung eingesetzt wird, in der $R^1$ für einen nicht hydrolysierbaren organischen Rest steht, welcher keine reaktive funktionelle Gruppe aufweist.

6.  Die wässrige Beschichtungszusammensetzung gemäß einem der vorstehenden Ansprüche, **dadurch gekennzeichnet, dass** die zur Herstellung der wässrigen Beschichtungszusammensetzung eingesetzte Sol-Gel-Zusammensetzung (B) erhältlich ist durch Umsetzung
    wenigstens einer Verbindung $Si(X^1)_3(R^1)$ als wenigstens eine Verbindung (A1),

    wobei $R^1$ darin für einen nicht hydrolysierbaren Rest steht, welcher wenigstens eine reaktive funktionelle Gruppe ausgewählt aus der Gruppe bestehend aus primären Amino-Gruppen, sekundären Amino-Gruppen, Epoxid-Gruppen, und Gruppen, die eine ethylenisch ungesättige Doppelbindung aufweisen, aufweist,

und gegebenenfalls wenigstens einer Verbindung $Si(X^1)_4$ als wenigstens eine weitere Verbindung (A1),
und gegebenenfalls wenigstens einer Verbindung $Si(X^1)_3(R^1)$ als wenigstens eine weitere Verbindung (A1),

wobei $R^1$ darin für einen nicht hydrolysierbaren organischen Rest steht, welcher keine reaktive funktionelle Gruppe aufweist.

mit Wasser.

7. Die wässrige Beschichtungszusammensetzung gemäß einem der vorstehenden Ansprüche, **dadurch gekennzeichnet, dass** die zur Herstellung der wässrigen Beschichtungszusammensetzung eingesetzte Sol-Gel-Zusammensetzung (B) erhältlich ist durch Umsetzung
wenigstens einer Verbindung $Si(X^1)_3(R^1)$ als wenigstens eine Verbindung (A1),

wobei $R^1$ darin für einen nicht hydrolysierbaren $C_1$-$C_{10}$-aliphatischen organischen Rest steht, welcher wenigstens eine Epoxid-Gruppe als reaktive funktionelle Gruppe aufweist,

wenigstens einer Verbindung $Si(X^1)_3(R^1)$ als wenigstens eine weitere Verbindung (A1),

wobei $R^1$ darin für einen nicht hydrolysierbaren $C_1$-$C_{10}$-aliphatischen organischen Rest steht, welcher wenigstens eine reaktive funktionelle Gruppe ausgewählt aus der Gruppe bestehend aus primären Amino-Gruppen und sekundären Amino-Gruppen, aufweist,

wenigstens einer Verbindung $Si(X^1)_4$ als wenigstens eine weitere Verbindung (A1),
und wenigstens einer Verbindung $Si(X^1)_3(R^1)$ als wenigstens eine weitere Verbindung (A1),

wobei $R^1$ darin für einen nicht hydrolysierbaren organischen $C_1$-$C_{10}$-aliphatischen Rest steht, welcher keine reaktive funktionelle Gruppe aufweist.

mit Wasser.

8. Die wässrige Beschichtungszusammensetzung gemäß einem der vorstehenden Ansprüche, **dadurch gekennzeichnet, dass** die wässrige Sol-Gel-Zusammensetzung (B) wenigstens zwei unterschiedliche nicht hydrolysierbare organische Reste aufweist, wobei einer dieser Reste ein $C_{1-10}$-aliphatischer Rest ist, der wenigstens eine Hydroxyl-Gruppe als wenigstens eine reaktive funktionelle Gruppe aufweist und der verbleibende nicht hydrolysierbare organische Rest ein $C_{1-10}$-aliphatischer Rest ist, der wenigstens eine primäre Amino-Gruppe oder wenigstens eine sekundäre Amino-Gruppe als wenigstens eine reaktive funktionelle Gruppe aufweist.

9. Die wässrige Beschichtungszusammensetzung gemäß einem der vorstehenden Ansprüche, **dadurch gekennzeichnet, dass** die Beschichtungszusammensetzung wenigstens eine Metallionen-haltige Verbindung und/oder wenigstens eine zur Freisetzung von Metallionen geeignete metallatomhaltige Verbindung enthält, wobei die Metallionen Ionen von Metallatomen ausgewählt aus der Gruppe bestehend aus Zr, Ti, Co, V, W, Mo, Cu, Zn, In, Bi, Y und Lanthaniden sind, und wobei die Metallionen in der Beschichtungszusammensetzung in einer Konzentration im Bereich von 30 bis 20 000 ppm, bezogen auf das Gesamtgewicht der Beschichtungszusammensetzung in Gew.-%, enthalten sind.

10. Ein Verfahren zur Herstellung der wässrigen Beschichtungszusammensetzung gemäß einem der Ansprüche 1 bis 9 umfassend wenigstens die Schritte

(a1) Herstellen der wässrigen Sol-Gel-Zusammensetzung (B) durch Umsetzung wenigstens einer zur Herstellung der Sol-Gel-Zusammensetzung (B) geeigneten Ausgangsverbindung mit Wasser unter Hydrolyse und Kondensation der wenigstens einen Ausgangsverbindung, und
(a2) Überführen der nach Schritt (a1) erhaltenen wässrigen Sol-Gel-Zusammensetzung (B) in eine wässrige Dispersion oder Lösung (A) wenigstens eines elektrophoretisch abscheidbaren Bindemittels und gegebenenfalls wenigstens eines Vernetzungsmittels.

**11.** Eine Verwendung der wässrigen Beschichtungszusammensetzung gemäß einem der Ansprüche 1 bis 9 zur zumindest teilweisen Beschichtung eines elektrisch leitfähigen Substrats mit einem Elektrotauchlack.

**12.** Ein Verfahren zur zumindest teilweisen Beschichtung eines elektrisch leitfähigen Substrats mit einem Elektrotauchlack umfassend wenigstens den Schritt

(b1) zumindest teilweise Beschichtung des Substrats mit der wässrigen Beschichtungszusammensetzung gemäß einem der Ansprüche 1 bis 9 durch eine zumindest teilweise elektrophoretische Abscheidung dieser Beschichtungszusammensetzung auf der Substratoberfläche.

**13.** Das Verfahren gemäß Anspruch 12, **dadurch gekennzeichnet, dass** Schritt (b1) in wenigstens zwei aufeinanderfolgenden Stufen (b1-a) und (b1-b) durchgeführt wird und eine wässrige Beschichtungszusammensetzung gemäß einem der Ansprüche 1 bis 9 eingesetzt wird, wobei

(b1-a) bei einer angelegten Spannung in einem Bereich von 1 bis 50 V, und
(b1-b) bei einer angelegten Spannung in einem Bereich von 50 bis 400 V durchgeführt wird, unter der Bedingung, dass die in Stufe (b1-b) angelegte Spannung um wenigstens 10V größer ist als die in Stufe (b1-a) angelegte Spannung.

**14.** Ein zumindest teilweise mit der wässrigen Beschichtungszusammensetzung gemäß einem der Ansprüche 1 bis 9 beschichtetes elektrisch leitfähiges Substrat.

**15.** Ein aus wenigstens einem Substrat gemäß Anspruch 14 hergestellter Gegenstand oder hergestelltes Bauteil.

**Claims**

**1.** Aqueous coating composition comprising

(A) at least one aqueous dispersion or solution of at least one electrophoretically depositable binder and optionally of at least one crosslinking agent, and
(B) at least one aqueous sol-gel composition,

for at least partly coating an electrically conductive substrate with an electrocoat material,

the electrophoretically depositable binder being cathodically depositable and being a polymeric resin which has reactive functional groups which permit a crosslinking reaction with the crosslinking agent optionally present, and the aqueous sol-gel composition (B) being obtainable by reaction of at least one starting compound suitable for preparing the sol-gel composition (B) with water, with hydrolysis and condensation of the at least one starting compound,

the at least one starting compound having at least one metal atom and/or semimetal atom and at least two hydrolyzable groups, and at least one nonhydrolyzable organic radical.

**2.** Aqueous coating composition according to Claim 1, **characterized in that** the sol-gel composition (B) present in the aqueous coating composition, after hydrolysis and condensation of the at least one starting compound, has a solids content in the range from 0.1 to 40 wt%, based on the total weight of the aqueous coating composition.

**3.** Aqueous coating composition according to Claim 1 or 2, **characterized in that** the sol-gel composition (B) used for preparing the aqueous coating composition is obtainable by reacting at least one compound

$$(A1) \qquad (M^1)^x(X^1)_a(R^1),$$

and/or

$$(A2) \qquad (M^2)^y(X^2)_b(R^2)(R^3)$$

with water, in which

$M^1$ and $M^2$ each independently of one another are a metal atom or a semimetal atom,

$X^1$ and $X^2$ each independently of one another are a hydrolyzable group,

x is the valence of the metal atom or semimetal atom $M^1$,

y is the valence of the metal atom or semimetal atom $M^2$,

$R^1$ is $X^1$, a nonhydrolyzable organic radical, $(T)(M^1)^x(X^1)_c$, or $(U)[(M^1)^x(X^1)_c]_2$,

$R^2$ is a nonhydrolyzable organic radical,

$R^3$ is a nonhydrolyzable organic radical, $(T)(M^1)^x(X^1)_c$, $(U)[(M^1)^x(X^1)_c]_2$, $(V)(M^2)^y(X^2)_d(R^2)$, or $(W)[(M^2)^y(X^2)_d(R^2)]_2$,

a is x if $R^1$ is $X^1$ or

a is x-1 if $R^1$ is a nonhydrolyzable organic radical, $(T)(M^1)^x(X^1)_c$, or $(U)[(M^1)^x(X^1)_c]_2$, in each case with the proviso that a is at least 2,

b is y-2,

with the proviso that b is at least 2,

T, U, V and W in each case independently of one another are each a radical which has 1 to 30 carbon atoms and may optionally have up to 10 heteroatoms and heteroatom groups selected from the group consisting of 0, S and N,

c is x-1, and

d is y-2.

4. Aqueous coating composition according to Claim 3, **characterized in that**

$X^1$ and $X^2$ are selected each independently of one another from the group consisting of halides and alkoxy groups O-$R^a$, in which $R^a$ in each case is a $C_{1-16}$ aliphatic radical, and

$M^1$ and $M^2$ are selected each independently of one another from the group consisting of Al, Ti, Zr, Fe, B, and Si.

5. Aqueous coating composition according to Claim 3 or 4, **characterized in that**

at least one compound (A1) is used as at least one starting compound in which $R^1$ is a nonhydrolyzable organic radical which has at least one reactive functional group selected from the group consisting of primary amino groups, secondary amino groups, epoxide groups, thiol groups, isocyanate groups, phosphorus-containing groups, and groups which have an ethylenically unsaturated double bond,

and optionally at least one further compound (A1) is used as at least one starting compound in which $R^1$ is $X^1$,

and optionally at least one further compound (A1) is used as at least one starting compound in which $R^1$ is a nonhydrolyzable organic radical which has no reactive functional group.

6. Aqueous coating composition according to any of the preceding claims, **characterized in that** the sol-gel composition (B) used for preparing the aqueous coating composition is obtainable by reacting

at least one compound $Si(X^1)_3(R^1)$ as at least one compound (A1),

> where $R^1$ therein is a nonhydrolyzable organic radical which has at least one reactive functional group selected from the group consisting of primary amino groups, secondary amino groups, epoxide groups, and groups which have an ethylenically unsaturated double bond,

and optionally at least one compound $Si(X^1)_4$ is used as at least one further compound (A1),

and optionally at least one compound $Si(X^1)_3(R^1)$ is used as at least one further compound (A1),

> where $R^1$ therein is a nonhydrolyzable organic radical which has no reactive functional group,

with water.

7. Aqueous coating composition according to any of the preceding claims, **characterized in that** the sol-gel composition (B) used for preparing the aqueous coating composition is obtainable by reacting

at least one compound $Si(X^1)_3(R^1)$ as at least one compound (A1),

> where $R^1$ therein is a nonhydrolyzable $C_1$-$C_{10}$ aliphatic organic radical which has at least one epoxide group as reactive functional group,

at least one compound $Si(X^1)_3(R^1)$ as at least one further compound (A1),

> where $R^1$ therein is a nonhydrolyzable $C_1$-$C_{10}$ aliphatic organic radical which has at least one reactive functional group selected from the group consisting of primary amino groups and secondary amino groups,

at least one compound $Si(X^1)_4$ as at least one further compound (A1),
and at least one compound $Si(X^1)_3(R^1)$ as at least one further compound (A1),
where $R^1$ therein is a nonhydrolyzable organic $C_1$-$C_{10}$ aliphatic radical which has no reactive functional group,
with water.

8. Aqueous coating composition according to any of the preceding claims, **characterized in that** the aqueous sol-gel composition (B) has at least two different non-hydrolyzable organic radicals, where one of these radicals is a $C_1$-$C_{10}$ aliphatic radical which has at least one hydroxyl group as at least one reactive functional group, and the remaining nonhydrolyzable organic radical is a $C_1$-$C_{10}$ aliphatic radical which has at least one primary amino group or at least one secondary amino group as at least one reactive functional group.

9. Aqueous coating composition according to any of the preceding claims, **characterized in that** the coating composition comprises at least one metal ion-containing compound and/or at least one metal atom-containing compound suitable for releasing metal ions, the metal ions being ions of metal atoms selected from the group consisting of Zr, Ti, Co, V, W, Mo, Cu, Zn, In, Bi, Y, and lanthanides, and the metal ions being present in the coating composition in a concentration in the range from 30 to 20 000 ppm, based on the total weight of the coating composition in wt%.

10. Method for producing the aqueous coating composition according to any of Claims 1 to 9, comprising at least the steps of

(a1) preparing the aqueous sol-gel composition (B) by reacting at least one starting compound suitable for preparing the sol-gel composition (B) with water, with hydrolysis and condensation of the at least one starting compound, and
(a2) converting the aqueous sol-gel composition (B) obtained by step (a1) into an aqueous dispersion or solution (A) of at least one electrophoretically depositable binder and optionally of at least one crosslinking agent.

11. Use of the aqueous coating composition according to any of Claims 1 to 9 for at least partly coating an electrically conductive substrate with an electrocoat material.

12. Method for at least partly coating an electrically conductive substrate with an electrocoat material, comprising at least the step of

(b1) at least partly coating the substrate with the aqueous coating composition according to any of claims 1 to 9 by at least partial electrophoretic deposition of this coating composition on the substrate surface.

13. Method according to Claim 12, **characterized in that** step (b1) is carried out in at least two successive stages (b1-a) and (b1-b) and an aqueous coating composition according to any of claims 1 to 9 is used, where

(b1-a) is carried out at an applied voltage in a range from 1 to 50 V, and
(b1-b) is carried out at an applied voltage in a range from 50 to 400 V, with the proviso that the voltage applied in stage (b1-b) is greater by at least 10 V than the voltage applied in stage (b1-a).

14. Electrically conductive substrate coated at least partly with the aqueous coating composition according to any of Claims 1 to 9.

15. Article or component produced from at least one substrate according to Claim 14.

**Revendications**

1. Composition aqueuse de revêtement, comprenant

(A) au moins une dispersion ou solution aqueuse d'au moins un liant pouvant être déposé par électrophorèse et le cas échéant d'au moins un réticulant et
(B) au moins une composition aqueuse sol-gel,

pour le revêtement au moins partiel d'un substrat électriquement conducteur par une laque d'électro-immersion, le liant pouvant être déposé par électrophorèse étant déposable par voie cathodique et étant une résine polymère qui présente des groupes fonctionnels réactifs qui permettent une réaction de réticulation avec le réticulant éventuellement présent et

la composition (B) sol-gel aqueuse pouvant être obtenue par transformation d'au moins un composé de départ, approprié pour la préparation de la composition (B) sol-gel, avec de l'eau sous hydrolyse et condensation dudit au moins un composé de départ,

ledit au moins un composé de départ présentant au moins un atome métallique et/ou atome semi-métallique et au moins deux groupes hydrolysables et au moins un radical organique non hydrolysable.

2. Composition aqueuse de revêtement selon la revendication 1, **caractérisée en ce que** la composition (B) sol-gel contenue dans la composition aqueuse de revêtement présente, après hydrolyse et condensation dudit au moins un composé de départ, une teneur en solides dans la plage de 0,1 à 40% en poids, par rapport au poids total de la composition aqueuse de revêtement.

3. Composition aqueuse de revêtement selon la revendication 1 ou 2, **caractérisée en ce que** la composition (B) sol-gel utilisée pour la préparation de la composition aqueuse de revêtement peut être obtenue par transformation d'au moins un composé

$$(A1) \qquad (M^1)^x(X^1)_a(R^1)$$

et/ou

$$(A2) \qquad (M^2)^y(X^2)_b(R^2)(R^3)$$

avec de l'eau, dans lesquelles

$M^1$ et $M^2$ représentent, à chaque fois indépendamment l'un de l'autre, un atome métallique ou un atome semi-métallique,

$X^1$ et $X^2$ représentent, à chaque fois indépendamment l'un de l'autre, un groupe hydrolysable,

x représente la valence de l'atome métallique ou de l'atome semi-métallique $M^1$,

y représente la valence de l'atome métallique ou de l'atome semi-métallique $M^2$,

$R^1$ représente $X^1$, un radical organique non hydrolysable, représente $(T)(M^1)^x(X^1)_c$ ou représente $(U)[(M^1)^x(X^1)_c]_2$,

$R^2$ représente un radical organique non hydrolysable,

$R^3$ représente un radical organique non hydrolysable, représente $(T)(M^1)^x(X^1)_c$, représente $(U)[(M^1)^x(X^1)_c]_2$, représente $(V)(M^2)^y(X^2)_d(R^2)$ ou représente $(W)[(M^2)^y(X^2)_d(R^2)]_2$,

a représente x lorsque $R^1$ représente $X^1$ ou

a représente x-1, lorsque $R^1$ représente un radical organique non hydrolysable, représente $(T)(M^1)^x(X^1)_c$ ou représente $(U)[(M^1)^x(X^1)_c]_2$, à chaque fois à condition que a représente au moins 2,

b représente y-2, à condition que b représente au moins 2,

T, U, V et W représentent, à chaque fois indépendamment les uns des autres, un radical qui présente 1 à 30 atomes de carbone et qui peut le cas échéant présenter jusqu'à 10 hétéroatomes et groupes d'hétéroatomes choisis dans le groupe constitué par O, S et N,

c représente x-1 et

d représente y-2.

4. Composition aqueuse de revêtement selon la revendication 3, **caractérisée en ce que**
$X^1$ et $X^2$ sont choisis, à chaque fois indépendamment l'un de l'autre, dans le groupe constitué par les halogénures et les groupes alcoxy O-$R^a$, où $R^a$ représente à chaque fois un radical aliphatique en $C_{1-16}$, et
$M^1$ et $M^2$ sont choisis, à chaque fois indépendamment l'un de l'autre, dans le groupe constitué par Al, Ti, Zr, Fe, B et Si.

5. Composition aqueuse de revêtement selon la revendication 3 ou 4, **caractérisée en ce que** au moins un composé (A1) est utilisé en tant qu'au moins un composé de départ, dans lequel $R^1$ représente un radical organique non hydrolysable qui présente au moins un groupe fonctionnel réactif choisi dans le groupe constitué par les groupes amino primaire, les groupes amino secondaire, les groupes époxyde, les groupes thiol, les groupes isocyanate, les groupes contenant du phosphore et les groupes qui présentent une double liaison éthyléniquement insaturée, et le cas échéant au moins un autre composé (A1) est utilisé en tant qu'au moins un composé de départ, dans

lequel $R^1$ représente $X^1$,
et le cas échéant au moins un autre composé (A1) est utilisé en tant qu'au moins un composé de départ, dans lequel $R^1$ représente un groupe organique non hydrolysable, qui ne présente pas de groupe fonctionnel réactif.

6. Composition aqueuse de revêtement selon l'une quelconque des revendications précédentes, **caractérisée en ce que** la composition (B) sol-gel utilisée pour la préparation de la composition aqueuse de revêtement peut être obtenue par transformation
d'au moins un composé $Si(X^1)_3(R^1)$ en tant qu'au moins un composé (A1),
$R^1$ représentant, dans ce composé, un radical organique non hydrolysable qui présente au moins un groupe fonctionnel réactif choisi dans le groupe constitué par les groupes amino primaire, les groupes amino secondaire, les groupes époxyde et les groupes qui présentent une double liaison éthyléniquement insaturée,
et le cas échéant d'au moins un composé $Si(X^1)_4$ en tant qu'au moins un autre composé (A1),
et le cas échéant d'au moins un composé $Si(X^1)_3(R^1)$ en tant qu'au moins un autre composé (A1),
$R^1$ représentant, dans ce composé, un groupe organique non hydrolysable, qui ne présente pas de groupe fonctionnel réactif,
avec de l'eau.

7. Composition aqueuse de revêtement selon l'une quelconque des revendications précédentes, **caractérisée en ce que** la composition (B) sol-gel utilisée pour la préparation de la composition aqueuse de revêtement peut être obtenue par transformation
d'au moins un composé $Si(X^1)_3(R^1)$ en tant qu'au moins un composé (A1),
$R^1$ représentant, dans ce composé, un groupe organique aliphatique en $C_1$-$C_{10}$ non hydrolysable, qui présente au moins un groupe époxyde en tant que groupe fonctionnel réactif,
d'au moins un composé $Si(X^1)_3(R^1)$ en tant qu'au moins autre un composé (A1),
$R^1$ représentant, dans ce composé, un radical organique aliphatique en $C_1$-$C_{10}$ non hydrolysable, qui présente au moins un groupe fonctionnel réactif choisi dans le groupe constitué par les groupes amino primaire et les groupes amino secondaire,
d'au moins un composé $Si(X^1)_4$ en tant qu'au moins un autre composé (A1),
et d'au moins un composé $Si(X^1)_3(R^1)$ en tant qu'au moins autre un composé (A1),
$R^1$ représentant, dans ce composé, un groupe organique aliphatique en $C_1$-$C_{10}$ non hydrolysable, qui ne présente pas de groupe fonctionnel réactif, avec de l'eau.

8. Composition aqueuse de revêtement selon l'une quelconque des revendications précédentes, **caractérisée en ce que** la composition (B) sol-gel aqueuse présente au moins deux radicaux organiques non hydrolysables différents, un de ces radicaux étant un radical aliphatique en $C_{1-10}$, qui présente au moins un groupe hydroxyle en tant qu'au moins un groupe fonctionnel réactif, et le radical organique non hydrolysable résiduel étant un radical aliphatique en $C_{1-10}$, qui présente au moins un groupe amino primaire ou au moins un groupe amino secondaire en tant qu'au moins un groupe fonctionnel réactif.

9. Composition aqueuse de revêtement selon l'une quelconque des revendications précédentes, **caractérisée en ce que** la composition de revêtement contient au moins un composé contenant des ions métalliques et/ou au moins un composé contenant des atomes métalliques, approprié pour la libération d'ions métalliques, les ions métalliques étant des ions d'atomes métalliques choisis dans le groupe constitué par Zr, Ti, Co, V, W, Mo, Cu, Zn, In, Bi, Y et les lanthanides et les ions métalliques dans la composition de revêtement étant contenus en une concentration dans la plage de 30 à 20.000 ppm, par rapport au poids total de la composition de revêtement en % en poids.

10. Procédé pour la préparation de la composition aqueuse de revêtement selon l'une quelconque des revendications 1 à 9, comprenant au moins les étapes

(a1) préparation de la composition (B) sol-gel aqueuse par transformation d'au moins un composé de départ, approprié pour la préparation de la composition (B) sol-gel, avec de l'eau, avec hydrolyse et condensation dudit au moins un composé de départ, et
(a2) transfert de la composition (B) sol-gel aqueuse obtenue après l'étape (a1) dans une dispersion ou solution (A) aqueuse d'au moins un liant pouvant être déposé par électrophorèse et le cas échéant d'au moins un réticulant.

11. Utilisation de la composition aqueuse de revêtement selon l'une quelconque des revendications 1 à 9 pour le revêtement au moins partiel d'un substrat électriquement conducteur par une laque d'électro-immersion.

**12.** Procédé pour le revêtement au moins partiel d'un substrat électriquement conducteur par une laque d'électro-immersion, comprenant au moins l'étape

(b1) revêtement au moins partiel du substrat par une composition aqueuse de revêtement selon l'une quelconque des revendications 1 à 9 par un dépôt électrophorétique au moins partiel de cette composition de revêtement sur la surface du substrat.

**13.** Procédé selon la revendication 12, **caractérisé en ce que** l'étape (b1) est réalisée en au moins deux étapes successives (b1-a) et (b1-b) et une composition aqueuse de revêtement selon l'une quelconque des revendications 1 à 9 est utilisée,

l'étape (b1-a) étant réalisée à une tension appliquée dans une plage de 1 à 50 V et
l'étape (b1-b) étant réalisée à une tension appliquée dans une plage de 50 à 400 V, à condition que la tension appliquée dans l'étape (b1-b) soit supérieure d'au moins 10 V à la tension appliquée dans l'étape (b1-a).

**14.** Substrat électriquement conducteur revêtu au moins partiellement par la composition aqueuse de revêtement selon l'une quelconque des revendications 1 à 9.

**15.** Objet ou pièce fabriqué(e) à partir d'au moins un substrat selon la revendication 14.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080248211 A1
- EP 1990379 A2
- WO 2010088250 A1
- WO 2012009351 A1
- WO 2001021718 A1
- EP 1510558 A1
- WO 2009115504 A1
- DE 3518732
- DE 3518770
- EP 0004090 A
- EP 0012463 A
- EP 0961797 B1
- EP 0505445 B1

**In der Beschreibung aufgeführte Nicht-Patentliteratur**

- Römpp Lexikon Lacke und Druckfarben. Georg Thieme Verlag, 1998, 250 ff
- **D. WANG et al.** *Progress in Organic Coatings,* 2009, vol. 64, 327-338
- **S. ZHENG et al.** *J. Sol-Gel. Sci. Technol.,* 2010, vol. 54, 174-187
- Römpp Lexikon, Lacke und Druckfarben. Georg Thieme Verlag, 1998